Europäisches Patentamt

European Patent Office

Office européen des brevets

(19)

(11) **EP 1 051 703 B1**

(12) **FASCICULE DE BREVET EUROPEEN**

(45) Date de publication et mention
de la délivrance du brevet:
**10.09.2003 Bulletin 2003/37**

(21) Numéro de dépôt: **99901696.7**

(22) Date de dépôt: **03.02.1999**

(51) Int Cl.$^7$: **G10L 19/00**

(86) Numéro de dépôt international:
**PCT/FR99/00221**

(87) Numéro de publication internationale:
**WO 99/040573 (12.08.1999 Gazette 1999/32)**

(54) **PROCEDE DECODAGE D'UN SIGNAL AUDIO AVEC CORRECTION DES ERREURS DE TRANSMISSION**

VERFAHREN ZUR DEKODIERUNG EINES AUDIOSIGNALS MIT KORREKTUR VON ÜBERTRAGUNGSFEHLERN

METHOD FOR DECODING AN AUDIO SIGNAL WITH TRANSMISSION ERROR CORRECTION

(84) Etats contractants désignés:
**CH DE ES GB IT LI NL**

(30) Priorité: **06.02.1998 FR 9801441**

(43) Date de publication de la demande:
**15.11.2000 Bulletin 2000/46**

(73) Titulaire: **FRANCE TELECOM**
**75015 Paris (FR)**

(72) Inventeur: **PROUST, Stéphane**
**F-22660 Trelevern (FR)**

(74) Mandataire: **Loisel, Bertrand**
**Cabinet Plasseraud,**
**84, rue d'Amsterdam**
**75440 Paris Cédex 09 (FR)**

(56) Documents cités:
**EP-A- 0 459 358**       **EP-A- 0 673 017**

• **HUSAIN A ET AL: "CLASSIFICATION AND SPECTRAL EXTRAPOLATION BASED PACKET RECONSTRUCTION FOR LOW-DELAY SPEECH CODING" PROCEEDINGS OF THE GLOBAL TELECOMMUNICATIONS CONFERENCE (GLOBECOM), SAN FRANCISCO, NOV. 28 - DEC. 2, 1994, vol. 2, 28 novembre 1994, pages 848-852, XP000488660 INSTITUTE OF ELECTRICAL AND ELECTRONICS ENGINEERS**

**Description**

La présente invention concerne le domaine du codage numérique des signaux audio. Elle se rapporte plus particulièrement à un procédé de décodage utilisé pour reconstituer un signal audio codé selon une méthode faisant appel à un filtre de synthèse à court terme à adaptation vers l'arrière, ou filtre "LPC backward".

Les systèmes de codage prédictif par blocs analysent des trames successives d'échantillons du signal audio (parole ou musique en général) à coder pour extraire pour chacune de ces trames un certain nombre de paramètres. Ces paramètres sont quantifiés pour former un flux binaire envoyé sur un canal de transmission.

Selon la qualité de ce canal et le type de transport, des perturbations peuvent affecter le signal transmis et produire des erreurs sur le flux binaire reçu par le décodeur. Ces erreurs peuvent intervenir de manière isolée dans le flux binaire. Mais elles se produisent très fréquemment par rafales, notamment dans le cas de canaux radiomobiles fortement perturbés ou de réseaux à transmission par paquets. C'est alors tout un paquet de bits correspondant à une (ou plusieurs) trames de signal qui est erroné ou non reçu.

Fréquemment, le système de transmission employé permet de détecter les trames erronées ou manquantes au niveau du décodeur. Des procédures dites de "récupération de trames effacées" sont alors mises en oeuvre. Ces procédures permettent d'extrapoler au décodeur les échantillons du signal manquant à partir des échantillons reconstitués aux trames précédant et éventuellement suivant les zones effacées.

La présente invention vise à améliorer les techniques de récupération de trames effacées, de façon à limiter fortement la dégradation subjective du signal perçue au décodeur en présence de trames effacées. Elle s'intéresse plus particulièrement au cas des codeurs prédictifs utilisant, de manière permanente ou intermittente, un filtre de prédiction linéaire calculé vers l'arrière sur le signal de synthèse, technique généralement nommée "analyse LPC backward" (ou "analyse LPC arrière") dans la littérature, "LPC" signifiant Linear Prediction Coding (codage à prédiction linéaire), et "backward" (vers l'arrière) indiquant que l'analyse est effectuée sur les signaux précédant la trame courante. Cette technique est particulièrement sensible aux erreurs de transmission en général et aux effacements de trame en particulier.

Parmi les systèmes de codage à prédiction linéaire, les codeurs de type CELP ("Code-Excited Linear Predictive") sont les plus répandus. L'utilisation de l'analyse LPC arrière dans un codeur CELP a été mise en oeuvre pour la première fois dans le codeur LD-CELP adopté par l'UIT-T (voir Recommandation UIT-T G.728). Ce codeur a permis une réduction du débit de 64 kbit/s à 16 kbit/s sans dégradation de la qualité subjective perçue.

L'analyse LPC arrière consiste à effectuer l'analyse LPC, non pas sur la trame courante du signal audio original, mais sur le signal de synthèse. En réalité, cette analyse est faite sur les échantillons du signal de synthèse des trames précédant la trame courante car ce signal est disponible à la fois au codeur (au moyen d'un décodage local généralement utile dans les codeurs à analyse-par-synthèse) et au décodeur distant. Etant donné que cette analyse est effectuée au codeur et au décodeur, les coefficients LPC obtenus n'ont pas à être transmis.

Relativement à une analyse LPC "forward" (analyse LPC avant) plus classique, dans laquelle la prédiction linéaire porte sur le signal d'entrée du codeur, l'analyse LPC arrière permet donc de disposer de davantage de débit, par exemple pour enrichir les dictionnaires d'excitation dans le cas du CELP. Elle autorise en outre, sans augmentation de débit, une augmentation considérable de l'ordre d'analyse, le filtre de synthèse LPC ayant typiquement 50 coefficients pour le codeur LD-CELP contre 10 coefficients pour la plupart des codeurs utilisant une analyse LPC avant.

L'analyse LPC arrière permet donc, grâce à un ordre de filtre LPC plus élevé, de mieux modéliser les signaux musicaux, dont le spectre est sensiblement plus riche que les signaux de parole. Une autre raison pour laquelle cette technique est bien adaptée au codage des signaux musicaux est que ces signaux ont un spectre généralement plus stationnaire que les signaux de parole, ce qui améliore les performances de l'analyse LPC arrière. En contrepartie, un bon fonctionnement de l'analyse LPC arrière exige 3 conditions:

(i) une bonne qualité du signal de synthèse, qui doit être très proche du signal original. Ceci impose un débit de codage relativement élevé. 13kbit/s semble être la limite inférieure compte tenu de la qualité actuelle des codeurs CELP;

(ii) une trame de longueur réduite ou un signal suffisamment stationnaire. Il existe en effet un retard d'une trame entre le signal analysé et le signal à coder. La longueur de trame doit donc être faible par rapport au temps de stationnarité moyen du signal.

(iii) peu d'erreurs de transmission entre le codeur et le décodeur. Dès que les signaux de synthèse deviennent différents, le codeur et le décodeur ne calculent plus le même filtre. Des divergences importantes peuvent alors exister et s'amplifier, même en l'absence de toute nouvelle perturbation.

La sensibilité des codeurs/décodeurs à analyse LPC arrière aux erreurs de transmission provient principalement du phénomène récursif suivant : la différence entre le signal de synthèse généré au niveau du codeur (décodeur local) et le signal de synthèse reconstruit au décodeur par un dispositif de récupération de trame effacée provoque pour la trame suivante, une différence entre le filtre LPC arrière calculé au décodeur et celui calculé au codeur car ceux-ci sont calculés sur ces signaux différents. Ces filtres sont utilisés à leur tour pour générer les signaux de synthèse de la trame suivante qui seront donc différents au codeur et au décodeur. Le phénomène peut donc se propager, s'amplifier et provoquer des divergences graves et irréversibles entre codeur et décodeur. Comme les filtres LPC arrière ont un ordre généralement élevé (30 à 50 coefficients), leur contribution au spectre du signal de synthèse est importante (gains de prédiction élevés).

De nombreux algorithmes de codage utilisent des techniques de récupération de trames effacées. Le décodeur est informé de l'occurrence d'une trame effacée d'une manière ou d'une autre (par exemple, dans le cas des systèmes radiomobiles, par la réception de l'information d'effacement de trame provenant du décodeur canal qui détecte des erreurs de transmission et peut en corriger certaines). Les dispositifs de récupération de trames effacées ont pour objectif, à partir d'une ou plusieurs des dernières trames précédentes considérées comme valides, d'extrapoler les échantillons de la trame effacée. Certains dispositifs extrapolent ces échantillons par des techniques de substitution de formes d'onde prélevant directement des échantillons dans les signaux décodés passés (voir D.J. Goodman et al.: "Waveform Substitution Techniques for Recovering Missing Speech Segments in Packet Voice Communications", IEEE Trans. on ASSP, Vol. ASSP-34, N°6, décembre 1986). Dans le cas de codeurs prédictifs, de type CELP par exemple, on se sert, pour remplacer les échantillons des trames effacées, du modèle de synthèse utilisé pour synthétiser les trames valides. La procédure de récupération des trames effacées doit alors fournir les paramètres nécessaires à la synthèse, qui ne sont pas disponibles pour les trames effacées (voir par exemple Recommandations UIT-T G.723.1 et G.729). Certains paramètres manipulés ou codés par les codeurs prédictifs présentent une forte corrélation intertrames. C'est notamment le cas des paramètres LPC, et des paramètres de prédiction à long terme (retard LTP et gain associé) pour les sons voisés. Du fait de cette corrélation, il est plus avantageux de réutiliser les paramètres de la dernière trame valide pour synthétiser la trame effacée plutôt qu'utiliser des paramètres erronés ou aléatoires.

Pour l'algorithme de codage CELP, les paramètres de la trame effacée sont classiquement obtenus de la manière suivante:

- le filtre LPC est obtenu à partir des paramètres LPC de la dernière trame valide, soit par simple recopie des paramètres, soit en introduisant un certain amortissement;
- une détection voisé/non voisé permet de déterminer le degré d'harmonicité du signal au niveau de la trame effacée (cf. Recommandation UIT-T G.723.1);
- dans le cas non voisé, un signal d'excitation est généré de manière partiellement aléatoire, par exemple par tirage aléatoire d'un mot de code et reprise du gain de l'excitation passée légèrement amorti (cf. Recommandation UIT-T G.729), ou sélection aléatoire dans l'excitation passée (cf. Recommandation UIT-T G.728);
- dans le cas d'un signal voisé, le retard LTP est généralement celui calculé à la trame précédente, éventuellement avec une légère "gigue" pour éviter un son résonnant trop prolongé, le gain LTP est pris très voisin de 1 ou égal à 1. Le signal d'excitation est généralement limité à la prédiction à long terme effectuée à partir de l'excitation passée.

Dans le cas d'un système de codage utilisant une analyse LPC avant, les paramètres du filtre LPC sont extrapolés de manière simple à partir des paramètres de la trame précédente: le filtre LPC utilisé pour la première trame effacée est généralement le filtre de la trame précédente, éventuellement amorti (contours du spectre rendus légèrement plus plats, diminution du gain de prédiction). Cet amortissement peut être obtenu par un coefficient d'expansion spectrale appliqué aux coefficients du filtre ou, si ces coefficients sont représentés par des LSP (paires de lignes spectrales), en imposant un écartement minimum des paires de lignes spectrales (Recommandation UIT-T G. 723.1).

La technique d'expansion spectrale a été proposée dans le cas du codeur de la Recommandation UIT-T G. 728, qui met en oeuvre une analyse LPC arrière: à la première trame effacée, un ensemble de paramètres LPC est d'abord calculé sur le signal de synthèse (valide) passé. On applique à ce filtre un facteur d'expansion de 0,97, facteur qui est itérativement multiplié par 0,97 à chaque nouvelle trame effacée. On notera que cette technique n'est mise en oeuvre que lorsque la trame est effacée. Dès la première trame non effacée qui suit, les paramètres LPC utilisés par le décodeur sont ceux calculés normalement, c'est-à-dire sur le signal de synthèse.

Dans le cas d'une analyse LPC avant, il n'y a pas de phénomène de mémorisation de l'erreur en ce qui concerne les filtres LPC, sauf lorsque la quantification des filtres LPC utilise une prédiction (auquel cas on prévoit des mécanismes permettant la resynchronisation du prédicteur au bout d'un certain nombre de trames valides, en utilisant des facteurs de fuite dans la prédiction, ou une prédiction de type MA).

Dans le cas de l'analyse arrière, l'erreur se propage par le biais du signal de synthèse erroné qui est utilisé au décodeur pour engendrer les filtres LPC des trames valides suivant la zone effacée. L'amélioration du signal de synthèse produit lors de la trame effacée (extrapolation du signal d'excitation et des gains) est donc un moyen de garantir que les filtres LPC suivants (calculés sur le signal de synthèse précédent) seront plus proches de ceux calculés au codeur.

Les conditions (i) à (iii) évoquées ci-dessus montrent qu'une analyse arrière pure trouve vite ses limites lorsque l'on souhaite opérer à des débits sensiblement inférieurs à 16kbit/s. Outre la diminution de qualité du signal de synthèse qui dégrade les performances du filtre LPC, il est souvent nécessaire, pour réduire le débit, de s'accorder une longueur de trame plus importante (de 10 à 30 ms). On remarque alors que la dégradation intervient surtout lors des transitions de spectre et plus généralement dans les zones peu stationnaires. Dans les zones stationnaires et pour des signaux globalement très stationnaires comme la musique, l'analyse LPC arrière conserve un avantage très net sur l'analyse LPC avant.

Afin de conserver les avantages de l'analyse vers l'arrière, notamment les bonnes performances pour le codage des signaux musicaux, tout en poursuivant la réduction de débit, des systèmes de codage à analyse LPC mixte "forward/backward", ou avant/arrière, ont été réalisés (voir S. Proust et al.: "Dual Rate Low Delay CELP Coding (8kbits/s 16kbits/s) using a Mixed Backward/Forward Adaptive LPC Prediction", Proc. of the IEEE Workshop on Speech Coding for Telecommunications, septembre 1995, pages 37-38; et demande de brevet français N° 97 04684).

L'association des deux types d'analyse LPC permet de bénéficier des avantages des deux techniques: l'analyse LPC avant sert à coder les transitions et les zones non stationnaires, tandis que l'analyse LPC arrière, d'ordre plus élevé, sert à coder les zones stationnaires.

L'introduction de trames codées en avant parmi des trames codées en arrière permet en outre au codeur et au décodeur de converger en cas d'erreurs de transmission, et offre donc une robustesse à ces erreurs nettement supérieure à un codage arrière pur. Toutefois, le codage des signaux stationnaires se fait très majoritairement dans le mode arrière pour lequel le problème des erreurs de transmission reste crucial.

Ces systèmes mixtes avant/arrière visent par exemple des applications multimédia sur des réseaux à ressources limitées ou partagées, ou les communications radiomobiles de qualité améliorée. Pour ce type d'applications, la perte de paquets de bits est hautement probable, ce qui pénalise a priori les techniques sensibles aux pertes de trames telle l'analyse LPC arrière. La présente invention, permettant de diminuer fortement l'effet des trames effacées dans des systèmes utilisant l'analyse LPC arrière ou l'analyse LPC mixte avant/arrière, est donc particulièrement adaptée à ce type d'applications.

On signale aussi l'existence d'autres types de systèmes de codage audio faisant appel à la fois à une analyse LPC avant et à une analyse LPC arrière. Le filtre de synthèse peut notamment être une combinaison (convolution des réponses impulsionnelles) d'un filtre LPC avant et d'un filtre LPC arrière (voir EP-A-0 782 128). Les coefficients du filtre LPC avant sont alors calculés par le codeur et transmis sous forme quantifiée, tandis que les coefficients du filtre LPC arrière sont déterminés conjointement au codeur et au décodeur, selon un processus d'analyse LPC arrière effectuée comme expliqué précédemment après avoir soumis le signal synthétisé à un filtre inverse du filtre LPC avant.

La présente invention a pour but d'améliorer, dans les systèmes de codage prédictif par blocs utilisant une analyse LPC de type arrière ou de type mixte avant/arrière, la qualité subjective du signal de parole restitué par le décodeur lorsque, à cause d'une mauvaise qualité du canal de transmission ou par suite de la perte ou non réception d'un paquet dans un système à transmission par paquets, une ou plusieurs trames ont été effacées.

L'invention propose ainsi, dans le cas d'un système faisant constamment appel à une analyse LPC arrière, un procédé de décodage d'un flux binaire représentatif d'un signal audio codé par trames successives, le flux binaire étant reçu avec une information indiquant d'éventuelles trames effacées,

dans lequel, pour chaque trame, on forme un signal d'excitation à partir de paramètres d'excitation qui sont récupérés dans le flux binaire si la trame est valide et estimés d'une autre manière si la trame est effacée, et on filtre le signal d'excitation au moyen d'un filtre de synthèse pour obtenir un signal audio décodé,

dans lequel on effectue une analyse par prédiction linéaire sur la base du signal audio décodé obtenu jusqu'à la trame précédente pour estimer au moins en partie un filtre de synthèse relativement à la trame courante, les filtres de synthèse successivement utilisés pour filtrer le signal d'excitation tant qu'aucune trame n'est effacée étant conformes aux filtres de synthèse estimés,

et dans lequel, si une trame $n_0$ est effacée, on détermine au moins un filtre de synthèse utilisé pour filtrer le signal d'excitation relatif à une trame subséquente $n_0+i$ par une combinaison pondérée du filtre de synthèse estimé relativement à la trame $n_0+i$ et d'au moins un filtre de synthèse qui a été utilisé depuis la trame $n_0$.

Après occurrence d'une ou de plusieurs trames effacées, et pendant un certain nombre de trames, les filtres LPC arrière estimés par le décodeur sur le signal de synthèse passé ne sont pas ceux qu'il utilise effectivement pour reconstruire le signal de synthèse. Le décodeur utilise pour sa synthèse un filtre LPC dépendant du filtre arrière ainsi estimé, mais aussi des filtres utilisés pour la synthèse d'une ou plusieurs trames précédentes, depuis le dernier filtre calculé sur un signal de synthèse valide. Ceci est réalisé à l'aide de la combinaison pondérée appliquée aux filtres LPC suivant la trame effacée, qui opère un lissage et permet de forcer une certaine stationnarité spectrale. Cette combinaison peut varier en fonction de la distance à la dernière trame valide transmise. Le lissage de la trajectoire des filtres LPC utilisés en synthèse après occurrence d'une trame effacée a pour effet de limiter fortement les phénomènes de divergence et ainsi d'améliorer notablement la qualité subjective du signal décodé.

La sensibilité des analyses LPC arrière aux erreurs de transmission est principalement due au phénomène de divergence précédemment expliqué. La principale source de dégradation est due à la divergence progressive entre les filtres calculés au décodeur distant et les filtres calculés au décodeur local, divergence susceptible de créer des distorsions catastrophiques dans le signal de synthèse. Il importe donc de minimiser l'écart (en termes de distance spectrale) entre les deux filtres calculés, et de faire en sorte que cet écart tende vers 0 lorsque le nombre de trames sans erreurs suivant la (ou les) trame(s) effacée(s) augmente (propriété de reconvergence du système de codage). Les filtres arrière, d'ordre généralement élevé, ont une influence capitale sur le spectre du signal de synthèse. La convergence des filtres, favorisée par l'invention, assure la convergence des signaux de synthèse. La qualité subjective du signal synthétisé en présence de trames effacées est donc améliorée.

Si la trame $n_0+1$ suivant une trame effacée $n_0$ est également une trame effacée, on détermine de préférence le filtre de synthèse utilisé pour filtrer le signal d'excitation relatif à la trame $n_0+1$ à partir du filtre de synthèse utilisé pour filtrer le signal d'excitation relatif à la trame $n_0$. Ces deux filtres peuvent notamment être identiques. Le second pourrait également être déterminé en appliquant un coefficient d'expansion spectrale comme expliqué précédemment.

Dans un mode de réalisation préféré, des coefficients de pondération employés dans ladite combinaison pondérée dépendent du nombre i de trames séparant la trame $n_0+i$ de la dernière trame effacée $n_0$, de façon que le filtre de synthèse utilisé se rapproche progressivement du filtre de synthèse estimé.

En particulier, chaque filtre de synthèse utilisé pour filtrer le signal d'excitation relatif à une trame n étant représenté par K paramètres $P^k(n)$ ($1 \leq k \leq K$), les paramètres $P^k(n_0+i)$ du filtre de synthèse utilisé pour filtrer le signal d'excitation relatif à une trame $n_0+i$, faisant suite à i-1 trames valides ($i \geq 1$) précédées par une trame effacée $n_0$, peuvent être calculés selon la combinaison:

$$P^k(n_0+i) = [1-\alpha(i)].\tilde{P}^k(n_0+i) + \alpha(i).P^k(n_0) \qquad (1)$$

où $\tilde{P}^k(n_0+i)$ désigne le k-ième paramètre du filtre de synthèse estimé relativement à la trame $n_0+i$, et $\alpha(i)$ est un coefficient pondérateur positif ou nul, décroissant avec i à partir d'une valeur $\alpha(1)=\alpha_{max}$ au plus égale à 1.

La décroissance du coefficient $\alpha(i)$ permet d'avoir, dans les premières trames valides suivant une trame effacée, un filtre de synthèse relativement proche de celui utilisé pour la trame $n_0$, qui a généralement été déterminé dans de bonnes conditions, et de perdre progressivement la mémoire de ce filtre de la trame $n_0$ pour se rapprocher du filtre estimé pour la trame $n_0+i$.

Les paramètres $P_k(n)$ peuvent être les coefficients du filtre de synthèse, c'est-à-dire sa réponse impulsionnelle. Les paramètres $P_k(n)$ peuvent également être d'autres représentations de ces coefficients, telles que celles utilisées classiquement dans les codeurs à prédiction linéaire: coefficients de réflexion, LAR (log-area-ratio), PARCOR (partial correlation), LSP (line spectrum pairs)...

Le coefficient $\alpha(i)$ pour i>1 peut notamment être calculé par la récurrence:

$$\alpha(i) = \max\{0, \alpha(i-1)-\beta\} \qquad (2)$$

$\beta$ étant un coefficient compris entre 0 et 1.

Dans un mode de réalisation préféré de l'invention, les coefficients de pondération employés dans la combinaison pondérée dépendent d'une estimation d'un degré de stationnarité spectrale du signal audio, de façon que, dans le cas d'un signal faiblement stationnaire, le filtre de synthèse utilisé pour filtrer le signal d'excitation relatif à une trame $n_0+i$ suivant une trame effacée $n_0$ ($i \geq 1$) soit plus proche du filtre de synthèse estimé que dans le cas d'un signal fortement stationnaire.

On adapte ainsi l'assujettissement du filtre LPC arrière, et la stationnarité spectrale qu'il induit, en fonction d'une mesure de la stationnarité spectrale réelle moyenne du signal. Le lissage est augmenté (et donc la stationnarité spectrale) lorsque la stationnarité réelle du signal est élevée, et diminuée dans le cas contraire. En cas de stationnarité spectrale forte, les filtres arrière successifs varient très peu. On peut donc assujettir fortement les filtres successifs. Cela limite les risques de divergence et assure la stationnarité voulue.

Le degré de stationnarité spectrale du signal audio peut être estimé à partir d'une information incluse dans chaque trame valide du flux binaire. Dans certains systèmes, on peut en effet décider de consacrer du débit à la transmission de ce type d'information, permettant au décodeur de déterminer que le signal codé est plus ou moins stationnaire.

En variante, le degré de stationnarité spectrale du signal audio peut être estimé à partir d'une analyse comparative des filtres de synthèse successivement utilisés par le décodeur pour filtrer le signal d'excitation. La mesure de stationnarité spectrale peut être obtenue à l'aide de diverses méthodes de mesure de distances spectrales entre les filtres LPC arrière successivement utilisés par le décodeur (distance d'Itakura par exemple).

Le degré de stationnarité du signal peut être pris en compte dans un calcul des paramètres du filtre de synthèse effectué conformément à la relation (1) ci-dessus. Le coefficient pondérateur $\alpha(i)$ pour i>1 est alors une fonction croissante du degré de stationnarité spectrale estimé du signal audio. Le filtre utilisé par le décodeur se rapproche donc moins vite du filtre estimé quand la stationnarité est forte que quand elle est faible.

En particulier, lorsque $\alpha(i)$ est calculé selon la relation (2), le coefficient $\beta$ peut être une fonction décroissante du degré de stationnarité spectrale estimé du signal audio.

Tel qu'exposé ci-dessus, le procédé selon l'invention est applicable aux systèmes purement à analyse LPC arrière, pour lesquels le filtre de synthèse a une fonction de transfert de la forme $1/A_B(z)$, où $A_B(z)$ est un polynôme en $z^{-1}$ dont les coefficients sont obtenus par le décodeur à partir de l'analyse par prédiction linéaire portant sur le signal audio décodé.

Il est également applicable à des systèmes dans lesquels l'analyse LPC arrière est combinée avec une analyse LPC avant, avec une convolution des réponses impulsionnelles des filtres LPC avant et arrière, de la manière décrite dans EP-A-0 782 128. Dans ce cas, le filtre de synthèse a une fonction de transfert de la forme $1/[A_F(z).A_B(z)]$, où $A_F(z)$ et $A_B(z)$ sont des polynômes en $z^{-1}$, les coefficients du polynôme $A_F(z)$ étant obtenus à partir de paramètres inclus dans les trames valides du flux binaire, et les coefficients du polynôme $A_B(z)$ étant obtenus par le décodeur à partir de l'analyse par prédiction linéaire portant sur un signal obtenu en filtrant le signal audio décodé par un filtre de fonction de transfert $A_F(z)$.

Dans le cadre d'un système de codage à analyse LPC mixte avant/arrière, la présente invention propose un procédé de décodage d'un flux binaire représentatif d'un signal audio codé par trames successives, le flux binaire étant reçu avec une information indiquant d'éventuelles trames effacées, chaque trame valide du flux binaire incluant une information indiquant quel mode de codage a été appliqué pour coder le signal audio relatif à la trame parmi un premier mode de codage, dans lequel la trame contient des paramètres spectraux, et un second mode de codage,

dans lequel, pour chaque trame, on forme un signal d'excitation à partir de paramètres d'excitation qui sont récupérés dans le flux binaire si la trame est valide et estimés d'une autre manière si la trame est effacée, et on filtre le signal d'excitation au moyen d'un filtre de synthèse pour obtenir un signal audio décodé,

le filtre de synthèse utilisé pour filtrer le signal d'excitation étant construit à partir cesdits paramètres spectraux si le flux binaire indique le premier mode de codage,

dans lequel on effectue une analyse par prédiction linéaire sur la base du signal audio décodé obtenu jusqu'à la trame précédente pour estimer au moins en partie un filtre de synthèse relativement à la trame courante, et dans lequel, tant qu'aucune trame n'est effacée et que le flux binaire indique le second mode de codage, les filtres de synthèse successivement utilisés pour filtrer le signal d'excitation sont conformes aux filtres de synthèse estimés,

et dans lequel, si une trame $n_0$ est effacée, le flux binaire ayant indiqué le second mode de codage pour la précédente trame valide, la trame $n_0$ étant suivie par plusieurs trames valides pour lesquelles le flux binaire indique le second mode de codage, on détermine au moins un filtre de synthèse utilisé pour filtrer le signal d'excitation relatif à une trame subséquente $n_0+i$ par une combinaison pondérée du filtre de synthèse estimé relativement à la trame $n_0+i$ et d'au moins un filtre de synthèse qui a été utilisé depuis la trame $n_0$.

Ces dispositions règlent le cas des effacements survenant dans des périodes où le codeur fonctionne en mode arrière, essentiellement de la même manière que dans le cas des systèmes purement à codage arrière.

Les modes de réalisation préférés évoqués ci-dessus pour les systèmes purement à codage arrière sont directement transposables au cas des systèmes mixtes avant/arrière.

Il est intéressant de noter que le degré de stationnarité spectrale du signal audio, lorsqu'il est utilisé, peut être estimé à partir de l'information présente dans le flux binaire pour indiquer trame par trame le mode de codage du signal audio.

Le degré de stationnarité spectrale estimé peut notamment être déduit d'un décompte de trames traitées selon le second mode de codage et de trames traitées selon le premier mode de codage, appartenant à une fenêtre temporelle précédant la trame courante et ayant une durée de l'ordre de N trames, N étant un entier prédéfini.

Pour le cas d'un effacement se produisant alors que le codeur est en train de passer du mode avant au mode arrière, on indique que, si une trame $n_0$ est effacée, le flux binaire ayant indiqué le premier mode de codage (ou d'ailleurs le second mode de codage) pour la précédente trame valide, la trame $n_0$ étant suivie par au moins une trame valide pour laquelle le flux binaire indique le second mode de codage, alors on peut déterminer le filtre de synthèse utilisé pour filtrer le signal d'excitation relatif à la trame suivante $n_0+1$ à partir du filtre de synthèse estimé relativement à la trame $n_0$. Le filtre utilisé pour filtrer le signal d'excitation relatif à la trame suivante $n_0+1$ peut notamment être pris identique au filtre de synthèse estimé relativement à la trame $n_0$.

D'autres particularités et avantages de la présente invention apparaîtront dans la description ci-après d'exemples de réalisation non limitatifs, en référence aux dessins annexés, dans lesquels :

- la figure 1 est un schéma de principe d'un codeur audio dont le flux binaire de sortie peut être décodé conformément à l'invention ;

- la figure 2 est un schéma de principe d'un décodeur audio utilisant un filtre LPC arrière conformément à la présente invention ;
- la figure 3 est un organigramme d'une procédure d'estimation de la stationnarité spectrale du signal, applicable dans le décodeur de la figure 2 ; et
- la figure 4 est un organigramme du calcul du filtre LPC arrière, applicable dans le décodeur de la figure 2.

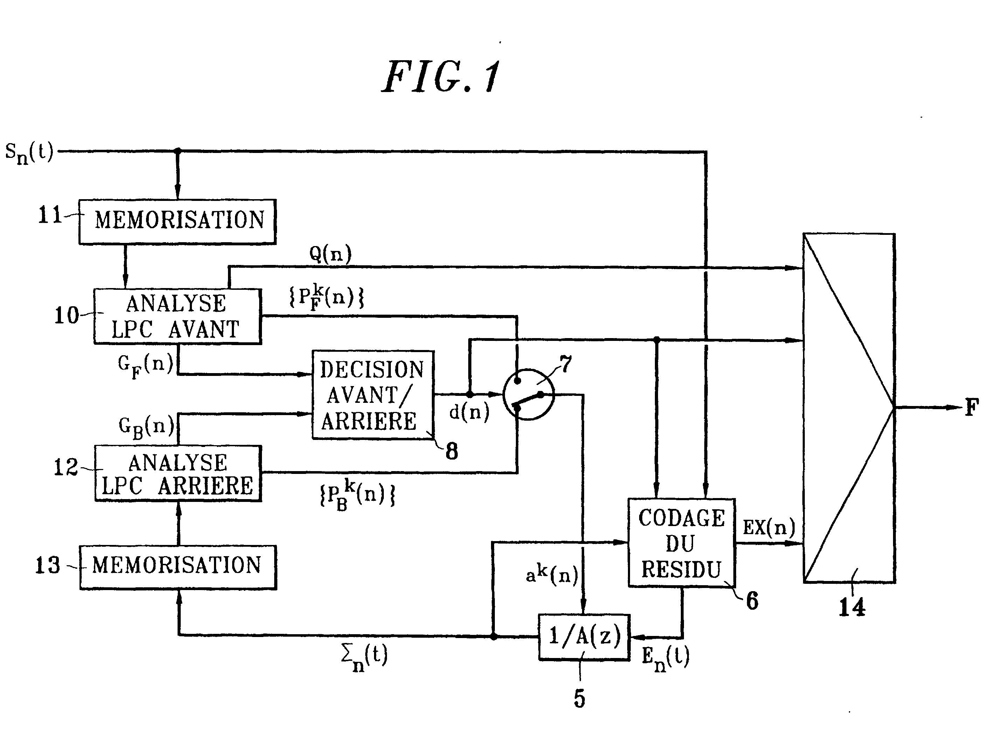

Le codeur audio représenté sur la figure 1 est un codeur à analyse LPC mixte avant/arrière.

Le signal audio à coder $S_n(t)$ est reçu sous forme de trames numériques successives indexées par l'entier n. Chaque trame se compose d'un nombre L d'échantillons. A titre d'exemple, la trame peut avoir une durée de 10 ms, soit L=80 pour une fréquence d'échantillonnage de 8 kHz.

Le codeur comprend un filtre de synthèse 5, de fonction de transfert 1/A(z), où A(z) est un polynôme en $z^{-1}$. Ce filtre 5 est normalement identique au filtre de synthèse utilisé par le décodeur associé. Le filtre 5 reçoit un signal d'excitation $E_n(t)$ fourni par un module 6 de codage de résidu, et forme localement une version $\Sigma_n(t)$ du signal synthétique que le décodeur produit en l'absence d'erreurs de transmission.

Le signal d'excitation $E_n(t)$ fourni par le module 6 est caractérisé par des paramètres d'excitation EX(n). Le codage opéré par le module 6 vise à rendre le signal de synthèse local $\Sigma_n(t)$ aussi proche que possible du signal d'entrée $S_n(t)$ au sens d'un certain critère. Ce critère correspond de façon classique à une minimisation de l'erreur de codage $\Sigma_n(t)$-$S_n(t)$ filtrée par un filtre de pondération perceptuelle déterminé à partir des coefficients du filtre de synthèse 5. Le module de codage 6 utilise généralement des blocs plus courts que les trames (sous-trames). La notation EX(n) désigne ici l'ensemble des paramètres d'excitation déterminés par le module 6 pour les sous-trames de la trame n.

De façon classique, le module de codage 6 peut opérer d'une part une prédiction à long terme pour déterminer un retard de prédiction à long terme et un gain associé rendant compte de la hauteur tonale de la parole, et d'autre part une séquence d'excitation résiduelle et un gain associé. La forme de la séquence d'excitation résiduelle dépend du type de codeur considéré. Dans le cas d'un codeur de type MP-LPC, elle correspond à un ensemble d'impulsions dont les positions et/ou les amplitudes sont quantifiées. Dans le cas d'un codeur de type CELP, elle correspond à un mot de code appartenant à un dictionnaire prédéterminé.

Le polynôme A(z), inverse de la fonction de transfert du filtre de synthèse 5, est de la forme:

$$A(z) \quad = \quad 1 \quad + \quad \sum_{k=1}^{K} a^k(n). z^{-k} \qquad (3)$$

où les $a^k(n)$ sont les coefficients de prédiction linéaire déterminés pour la trame n. Comme symbolisé par le commutateur 7 sur la figure 1, ils sont fournis soit par un module d'analyse LPC avant 10, soit par un module d'analyse LPC arrière 12, selon la valeur d'un bit d(n) déterminé par un module de décision 8 différenciant les trames pour lesquelles l'analyse LPC est effectuée vers l'avant (d(n)=0) des trames pour lesquelles l'analyse LPC est effectuée vers l'arrière (d(n)=1).

Le signal à coder $S_n(t)$ est fourni au module d'analyse par prédiction linéaire 10 qui effectue l'analyse LPC avant du signal $S_n(t)$. Un module de mémorisation 11 reçoit le signal $S_n(t)$, et le mémorise sur une fenêtre temporelle d'analyse qui couvre typiquement plusieurs trames jusqu'à la trame courante. Le module 10 effectue un calcul de prédiction linéaire d'ordre KF (typiquement KF≈10) sur cette fenêtre du signal $S_n(t)$, pour déterminer un filtre de prédiction linéaire dont la fonction de transfert $A_F(z)$ est de la forme :

$$A_F(z) \quad = \quad 1 \quad + \quad \sum_{k=1}^{KF} P_F^k(n). z^{-k} \qquad (4)$$

où $P_F^k(n)$ désigne le coefficient de prédiction d'ordre k obtenu après le traitement de la trame n.

Les méthodes d'analyse par prédiction linéaire pouvant être mises en oeuvre pour calculer ces coefficients $P_F^k(n)$ sont bien connues dans la technique du codage numérique. On pourra par exemple se reporter aux ouvrages "Digital Processing of Speech Signais" de L.R. Rabiner et R.W. Shafer, Prentice-Hall Int., 1978, et "Linear Prediction of Speech" de J.D. Markel et A.H. Gray, Springer Verlag Berlin Heidelberg, 1976.

Lorsque d(n)=0 (mode avant), les coefficients $P_F^k(n)$ calculés par le module 10 sont fournis au filtre de synthèse 5, c'est-à-dire que K=KF et $a^k(n)=P_F^k(n)$ pour $1 \le k \le K$. Le module 10 procède également à la quantification du filtre LPC avant. Il détermine ainsi des paramètres de quantification Q(n) pour chaque trame pour laquelle d(n)=0. Diverses méthodes de quantification peuvent être appliquées. Les paramètres Q(n) déterminés pour la trame n peuvent représenter directement les coefficients $P_F^k(n)$ du filtre. La quantification peut également être opérée sur les coefficients de réflexion, les LAR (log-area-ratio), les LSP (line spectrum pairs)... Les coefficients $P_F^k(n)$ qui sont fournis au filtre 5 lorsque d(n)=0 correspondent aux valeurs quantifiées.

Le signal de synthèse local $\Sigma_n(t)$ est fourni au module d'analyse par prédiction linéaire 12 qui effectue l'analyse LPC arrière. Un module de mémorisation 13 reçoit le signal $\Sigma_n(t)$, et le mémorise sur une fenêtre temporelle d'analyse qui couvre typiquement plusieurs trames jusqu'à la trame précédant la trame courante. Le module 12 effectue un calcul de prédiction linéaire d'ordre KB (typiquement KB≈50) sur cette fenêtre du signal de synthèse, pour déterminer un filtre de prédiction linéaire dont la fonction de transfert $A_B(z)$ est de la forme :

$$A_B(z) \;=\; 1 \;+\; \sum_{k=1}^{KB} P_B^k(n) . z^{-k} \qquad\qquad (5)$$

où $P_B^k(n)$ désigne le coefficient de prédiction d'ordre k obtenu après le traitement de la trame n-1.

Les méthodes de prédiction employées par le module 12 peuvent être les mêmes que celles employées par le module 10. Toutefois, le module 12 n'a pas besoin d'opérer de quantification du filtre $A_B(z)$.

Lorsque d(n)=1 (mode arrière), les coefficients $P_B^k(n)$ calculés par le module 12 sont fournis au filtre de synthèse 5, c'est-à-dire que K=KB et $a^k(n)=P_B^k(n)$ pour $1 \le k \le K$.

Chacun des modules 10,12 fournit un gain de prédiction $G_F(n),G_B(n)$, qu'il a maximisé pour obtenir ses coefficients de prédiction respectifs $P_F^k(n)$, $P_B^k(n)$. Le module de décision 8 analyse les valeurs de ces gains $G_F(n),G_B(n)$ au fur et à mesure des trames, pour décider des instants où le codeur fonctionnera en mode avant et en mode arrière.

En général, lorsque le gain $G_B(n)$ de la prédiction arrière est relativement élevé par rapport au gain $G_F(n)$ de la prédiction avant, on peut supposer que le signal à coder est plutôt stationnaire. Lorsque cette circonstance se produit sur un grand nombre de trames consécutives, il est judicieux de faire fonctionner le codeur en mode arrière, de sorte que le module 8 prend d(n)=1. Au contraire, dans les zones non stationnaires, il prend d(n)=0. Pour une méthode détaillée de décision avant/arrière, il est fait référence à la demande de brevet français N° 97 04684.

Sur la figure 1, la référence 14 désigne le multiplexeur de sortie du codeur, qui met en forme le flux binaire F. Le flux F inclut le bit de decision avant/arrière d(n) pour chaque trame.

Lorsque d(n)=0 (mode avant), la trame n du flux F inclut les paramètres spectraux Q(n) qui quantifient les coefficients $P_F^k(n)$ du filtre LPC avant. Le reste de la trame inclut les paramètres d'excitation EX(n) déterminés par le module 6.

Lorsque d(n)=1 (mode arrière), la trame n du flux F ne contient pas de paramètres spectraux Q(n). Le débit binaire de sortie étant le même, on dispose de davantage de bits pour le codage de l'excitation résiuelle. Le module 6 peut donc enrichir le codage du résidu, soit en attribuant davantage de bits à la quantification de certains paramètres (retard LTP, gains...) soit en augmentant la taille du dictionnaire CELP.

A titre d'exemple, le débit binaire peut être de 11,8 kbit/s pour un codeur de type ACELP (CELP à dictionnaires algébriques) fonctionnant en bande téléphonique (300 - 3400 Hz), avec des trames de 10 ms (L=80), une analyse LPC avant d'ordre KF=10, une analyse LPC arrière d'ordre KB=30, et une séparation de chaque trames en deux sous-trames (les filtres LPC avant et arrière calculés pour chaque trame sont utilisés dans le traitement de la deuxième sous-trame; dans le traitement de la première sous-trame, on utilise une interpolation entre ces filtres et ceux calculés pour la trame précédente).

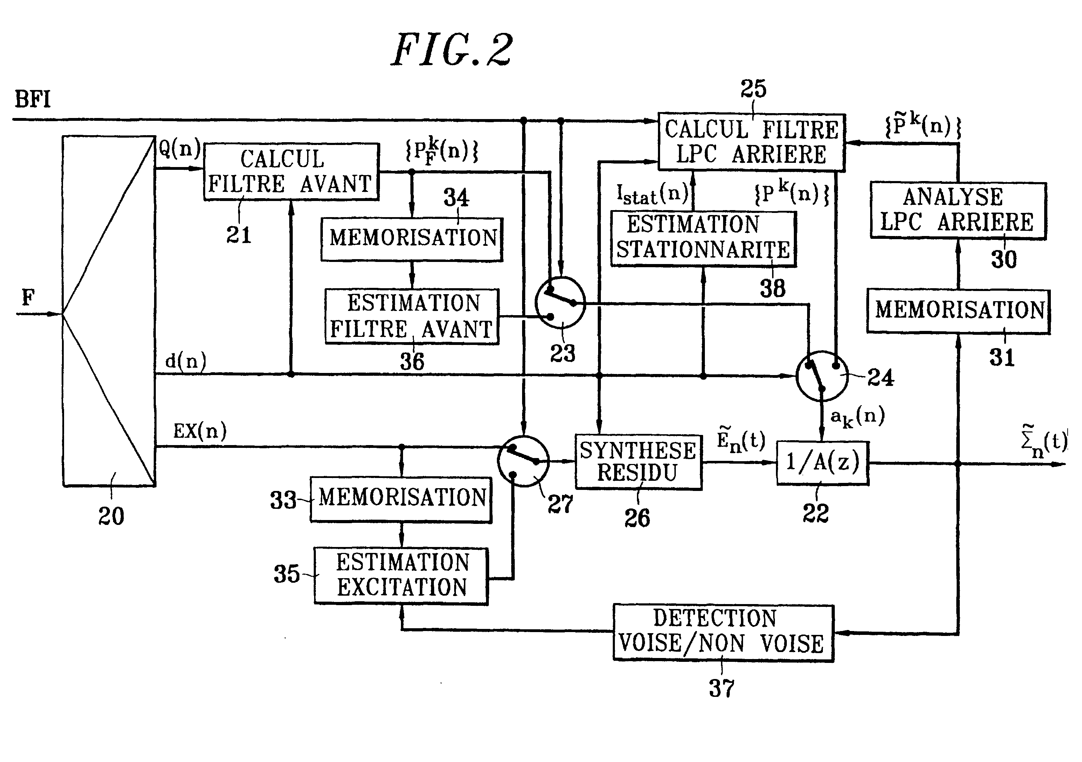

Le décodeur, dont la figure 2 montre le schéma de principe, reçoit, outre le flux binaire F, une information BFI indiquant les trames effacées.

Le flux binaire de sortie F du codeur est généralement soumis à un codeur canal qui introduit de la redondance selon un code ayant des capacités de détection et/ou de correction d'erreurs de transmission. En amont du décodeur audio, un décodeur canal associé exploite cette redondance pour détecter des erreurs de transmission et éventuellement en corriger certaines. Si la transmission d'une trame est tellement mauvaise que les capacités de correction du décodeur canal sont insuffisantes, celui-ci active l'indicateur BFI pour que le décodeur audio adopte le comportement approprié.

Sur la figure 2, la référence 20 désigne le démultiplexeur d'entrée du décodeur, qui délivre, pour chaque trame valide n du flux binaire reçu, le bit de décision avant/arrière d(n), les paramètres d'excitation EX(n) et, si d(n)=0, les paramètres spectraux Q(n).

Lorsqu'une trame n est indiquée comme effacée, Le décodeur considère que le mode de codage reste identique à celui de la dernière trame valide. Il adopte donc la valeur d(n)=d(n-1).

Pour une trame valide en mode avant (d(n)=0 lu dans le flux F), le module 21 calcule les coefficients $P_F^k(n)$ du filtre LPC avant ($1 \leq k \leq KF$) à partir des indices de quantification reçus Q(n). Les commutateurs 23,24 étant dans les positions représentées sur la figure 2, les coefficients calculés $P_F^k(n)$ sont fournis au filtre de synthèse 22, dont la fonction de transfert est alors $1/A(z)=1/A_F(z)$, avec $A_F(z)$ donné par la relation (3).

Si d(n)=0 pour une trame effacée, le décodeur continue à fonctionner en mode avant, en fournissant au filtre de synthèse KF coefficients $a^k(n)$ fournis par un module d'estimation 36.

Dans le cas d'une trame n en mode arrière, (d(n)=1 lu dans le flux ou conservé en cas d'effacement), les coefficients du filtre de synthèse 22 sont des coefficients $P^k(n)$ ($1 \leq k \leq K=KB$) déterminés par un module 25 de calcul du filtre LPC arrière, qui sera décrit plus loin. La fonction de transfert du filtre de synthèse 22 est alors $1/A(z)$, avec

$$A(z) \quad = \quad 1 \quad + \quad \sum_{k=1}^{KB} P^k(n) \cdot z^{-k} \tag{5}$$

Le filtre de synthèse 22 reçoit pour la trame n un signal d'excitation $\breve{E}_n(t)$ délivré par un module 26 de synthèse de résidu de codage LPC.

Pour une trame n valide, le module de synthèse 26 calcule le signal d'excitation $\breve{E}_n(t)$ à partir des paramètres d'excitation EX(n) lus dans le flux, le commutateur 27 étant dans la position représentée sur la figure 2. Dans ce cas, le signal d'excitation $\breve{E}_n(t)$ produit par le module de synthèse 26 est identique au signal d'excitation $E_n(t)$ délivré pour la même trame par le module 6 du codeur. De la même manière qu'au codeur, le mode de calcul du signal d'excitation dépend du bit de décision avant/arrière d(n).

Le signal de sortie $\tilde{\Sigma}_n(t)$ du filtre 22 constitue le signal de synthèse obtenu par le décodeur. De façon classique, ce signal de synthèse peut être ensuite soumis à un ou plusieurs post-filtres de mise en forme prévus dans le décodeur (non représentés).

Le signal de synthèse $\tilde{\Sigma}_n(t)$ est fourni à un module d'analyse par prédiction linéaire 30 qui effectue l'analyse LPC arrière de la même manière que le module 12 du décodeur de la figure 1, pour estimer un filtre de synthèse, dont les coefficients notés $\tilde{P}^k(n)$ ($1 \leq k \leq KB$) sont fournis au module de calcul 25. Les coefficients $\tilde{P}^k(n)$ relatifs à la trame n sont obtenus après prise en compte du signal synthétisé jusqu'à la trame n-1. Un module de mémorisation 31 reçoit le signal $\tilde{\Sigma}_n(t)$ et le mémorise sur la même fenêtre temporelle d'analyse que le module 13 de la figure 1. Le module d'analyse 30 procède alors aux mêmes calculs que le module 12 sur la base du signal de synthèse mémorisé.

Tant qu'il n'y a aucune trame effacée, le module 25 délivre des coefficients $P_k(n)$ égaux aux coefficients estimés $\tilde{P}^k(n)$ fournis par le module d'analyse 30. Par conséquent, tant qu'il n'y a aucune trame effacée, le signal de synthèse $\tilde{\Sigma}_n(t)$ délivré par le décodeur est exactement identique au signal de synthèse $\Sigma_n(t)$ qui a été déterminé au codeur, à condition bien entendu qu'il n'y ait aucun bit erroné dans les trames valides du flux F.

Les paramètres d'excitation EX(n) reçus par le décodeur, ainsi que les coefficients $P_F^k(n)$ du filtre LPC avant si d(n)=0, sont mémorisés pendant au moins une trame par des modules respectifs 33,34, afin de pouvoir restituer des paramètres d'excitation et/ou des paramètres LPC avant si une trame effacée survient. Les paramètres alors utilisés sont des estimations fournies par des modules respectifs 35,36 sur la base du contenu des mémoires 33,34 lorsque l'information BFI indique une trame effacée. Les méthodes d'estimation utilisables par les modules 35 et 36 peuvent être choisies parmi les méthodes évoquées plus haut. En particulier, les paramètres d'excitation peuvent être estimés par le module 35 en tenant compte d'une information sur le caractère plus ou moins voisé du signal de synthèse $\tilde{\Sigma}_n(t)$, fournie par un détecteur voisé/non voisé 37.

La récupération des coefficients du filtre LPC arrière lorsqu'une trame effacée est indiquée découle du calcul des coefficients $P^k(n)$ effectué par le module 25. Ce calcul dépend avantageusement d'une estimation $I_{stat}(n)$ du degré de stationnarité du signal audio, obtenue par un module 38 d'estimation de stationnarité.

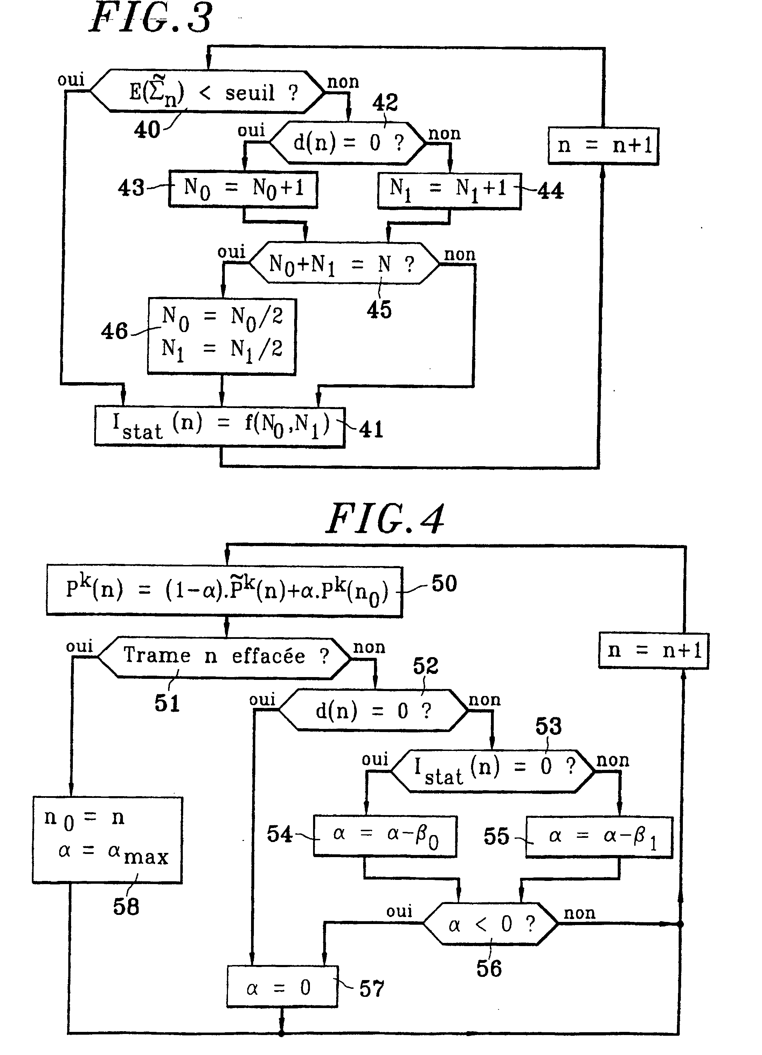

Ce module 38 peut fonctionner conformément à l'organigramme représenté sur la figure 3. Selon cette procédure, le module 38 utilise deux compteurs dont les valeurs sont notées $N_0$ et $N_1$. Leur rapport $N_1/N_0$ est représentatif de la proportion de trames codées en avant sur une fenêtre temporelle définie par un nombre N, dont la durée représente de l'ordre de N trames de signal (typiquement $N \approx 100$, soit une fenêtre de l'ordre de 1 s).

Le degré de stationnarité $I_{stat}(n)$ estimé pour la trame n est une fonction f des nombres $N_0$ et $N_1$. Il peut notamment être une fonction binaire telle que par exemple:

$f(N_0,N_1)=1$ si $N_1>4N_0$ (signal plutôt stationnaire);

$f(N_0,N_1)=0$ si $N_1 \leq 4N_0$ (signal peu stationnaire).

Si l'énergie $E(\tilde{\Sigma}_n)$ du signal de synthèse $\tilde{\Sigma}_n(t)$ délivré par le filtre 22 sur la trame courante n est inférieure à un seuil choisi afin que les trames trop peu énergétiques soient ignorées (test 40), les compteurs $N_0$ et $N_1$ ne sont pas modifiés lors de la trame n, le module 38 calculant directement le degré de stationnarité $I_{stat}(n)$ à l'étape 41. Sinon, il examine au test 42 le mode de codage indiqué pour la trame n (d(n) lu dans le flux ou d(n)=d(n-1) en cas d'effacement). Si d(n)=0, le compteur $N_0$ est incrémenté à l'étape 43. Si d(n)=1 le compteur $N_1$ est incrémenté à l'étape 44. Le module 38 calcule ensuite le degré de stationnarité $I_{stat}(n)$ à l'étape 41, à moins que la somme $N_0+N_1$ atteigne le nombre N (test 45), auquel cas les valeurs des deux compteurs $N_0$ et $N_1$ sont d'abord divisées par 2.

La procédure de calcul des coefficients $P^k(n)$ ($1 \leq k \leq KB$) par le module 25 peut être conforme à l'organigramme de la figure 4. Il est à noter que cette procédure est exécutée pour toutes les trames n, valides ou effacées, codées en avant ou en arrière. Le filtre calculé dépend d'un coefficient pondérateur $\alpha$, lui-même dépendant du nombre de trames écoulées depuis la dernière trame effacée et des degrés de stationnarité successivement estimés. L'indice de la dernière trame effacée précédant la trame courante est noté $n_0$.

Au début du traitement effectué pour une trame n, le module 25 produit les KB coefficients $P^k(n)$ qui, dans le cas où d(n)=1, sont fournis au filtre 22 pour synthétiser le signal $\tilde{\Sigma}(n)$ de la trame n. Si d(n)=0, ces coefficients $P^k(n)$ sont simplement calculés et mémorisés. Ce calcul est effectué à l'étape 50 selon la relation:

$$P^k(n) = (1-\alpha).\tilde{P}^k(n) + \alpha.P^k(n_0) \qquad (6)$$

où les $\tilde{P}^k(n)$ sont les coefficients estimés par le module 30 relativement à la trame n (c'est-à-dire en tenant compte du signal synthétisé jusqu'à la trame n-1), les $P^k(n_0)$ sont les coefficients que le module 25 a calculés relativement à la dernière trame effacée $n_0$, et $\alpha$ est le coefficient pondérateur, initialisé à 0.

La relation (6) correspond à la relation (1) lorsque au moins une trame valide $n_0+i$ fait suite à la trame effacée $n_0$ (i=1,2...).

Si la trame n est valide (test 51), le module 25 examine le bit de décision avant/arrière d(n) lu dans le flux à l'étape 52.

Si d(n)=1, le module 25 calcule la nouvelle valeur du coefficient $\alpha$ conformément à la relation (2) aux étapes 53 à 57, le coefficient $\beta$ étant choisi comme une fonction décroissante du degré de stationnarité $I_{stat}(n)$ estimé par le module 38 relativement à la trame n. Si $I_{stat}(n)=0$ à l'étape 53 (signal peu stationnaire), le coefficient $\alpha$ est diminué d'une quantité $\beta=\beta_0$ à l'étape 54. Si $I_{stat}(n)=1$ à l'étape 53 (signal plutôt stationnaire), le coefficient $\alpha$ est diminué d'une quantité $\beta=\beta_1$ à l'étape 55. Dans le cas où le degré de stationnarité $I_{stat}(n)$ est déterminé de façon binaire comme expliqué ci-dessus, les quantités $\beta_0$ et $\beta_1$ peuvent être respectivement égales à 0,5 et à 0,1. A l'étape 56, la nouvelle valeur de $\alpha$ est comparée à 0. Le traitement relatif à la trame n est terminé si $\alpha \geq 0$. Si $\alpha < 0$, ce coefficient $\alpha$ est mis à 0 à l'étape 57.

Dans le cas d'une trame n codée en avant (d(n)=0 à l'étape 52), le coefficient $\alpha$ est directement mis à 0 à l'étape 57.

Dans le cas où la trame n est effacée (test 51), l'indice n de la trame courante est affecté à l'indice $n_0$ désignant la dernière trame effacée, et le coefficient $\alpha$ est initialisé à sa valeur maximum $\alpha_{max}$ à l'étape 58 ($0 < \alpha_{max} \leq 1$).

La valeur maximum $\alpha_{max}$ du coefficient $\alpha$ peut être inférieure à 1. Toutefois, on choisit de préférence $\alpha_{max}=1$. Ainsi, lorsqu'une trame $n_0$ est effacée, le prochain filtre $P^k(n_0+1)$ calculé par le module 25 correspond au filtre qu'il a calculé après la réception de la dernière trame valide. Si plusieurs trames effacées se succèdent, le filtre calculé par le module 25 reste égal à celui calculé après réception de la dernière trame valide.

Si la première trame valide reçue après un effacement est codée en avant (d($n_0+1$)=0), le filtre de synthèse 22 reçoit les coefficients valides $P_F^k(n_0+1)$ calculés par le module 21 ainsi qu'un signal d'excitation valide. En conséquence, le signal synthétisé $\tilde{\Sigma}_{n_0+1}(t)$ est relativement fiable, de même que l'estimation $\tilde{P}^k(n_0+2)$ du filtre de synthèse faite par le module d'analyse 30. Grâce à la mise à 0 du coefficient $\alpha$ à l'étape 57, cette estimation $\tilde{P}^k(n_0+2)$ pourra être adoptée par le module de calcul 25 pour la trame suivante $n_0+2$.

Si la première trame valide reçue après un effacement est codée en arrière (d($n_0+1$)=1), le filtre de synthèse 22 reçoit les coefficients $P^k(n_0+1)$ pour cette trame valide. Avec le choix $\alpha_{max}=1$, on évite complètement de prendre en compte, dans le calcul de ces coefficients, l'estimation $\tilde{P}^k(n_0+1)$ qui a été déterminée de manière peu fiable par le module 30 après le traitement du signal de synthèse $\tilde{\Sigma}_{n0}(t)$ de la trame effacée $n0$ ($\tilde{\Sigma}_{n0}(t)$ a été obtenu par filtrage d'un signal d'excitation erroné).

Si les trames suivantes $n_0+2$... restent codées en arrière, le filtre de synthèse utilisé sera lissé à l'aide du coefficient $\alpha$ dont la valeur est diminuée plus ou moins vite selon qu'on se trouve dans une zone peu stationnaire ou très stationnaire du signal. Au bout d'un certain nombre de trames (10 cas dans le cas stationnaire, et 2 trames dans le cas non stationnaire avec les valeurs indiquées de $\beta_1$ et $\beta_0$), le coefficient $\alpha$ redevient nul, c'est-à-dire que le filtre $P^k(n_0+i)$ utilisé si le mode de codage reste vers l'arrière redevient identique au filtre $\tilde{P}^k(n_0+i)$ estimé par le module 30 à partir du signal de synthèse.

Dans ce qui précède, on a décrit en détail l'exemple d'un système à codage mixte avant/arrière. La mise en oeuvre de l'invention est très semblable dans le cas d'un codeur purement vers l'arrière :

- le flux de sortie F ne contient pas le bit de décision d(n) et les paramètres spectraux Q(n), mais seulement les paramètres d'excitation EX(n) ;
- les unités fonctionnelles 7, 8, 10 et 11 du codeur de la figure 1 ne sont pas nécessaires, les coefficients $P_B^k(n)$ calculés par le module 12 d'analyse LPC arrière étant directement utilisés par le filtre de synthèse 5 ;
- les unités fonctionnelles 21, 23, 24, 34 et 36 du décodeur de la figure 2 ne sont pas nécessaires, les coefficients $P^k(n)$ calculés par le module 25 étant directement utilisés par le filtre de synthèse 22.

Le bit de décision d(n) n'étant plus disponible au niveau du décodeur, le degré de stationnarité $I_{stat}(n)$, s'il est utilisé par le module de calcul 25, doit être calculé d'une autre manière. Si le flux binaire transmis ne contient aucune information particulière permettant au décodeur d'estimer la stationnarité, cette estimation peut être fondée sur une analyse comparative des filtres de synthèse $P^k(n)$ successivement calculés par le module 25. Si les distances spectrales mesurées entre ces filtres successifs restent relativement faibles sur une certaine fenêtre temporelle, on peut estimer que le signal est plutôt stationnaire.

## Revendications

1. Procédé de décodage d'un flux binaire (F) représentatif d'un signal audio ($S_n(t)$) codé par trames successives, le flux binaire étant reçu avec une information (BFI) indiquant d'éventuelles trames effacées,

    dans lequel, pour chaque trame, on forme un signal d'excitation ($\tilde{e}^k(n)$) à partir de paramètres d'excitation (EX(n)) qui sont récupérés dans le flux binaire si la trame est valide et estimés d'une autre manière si la trame est effacée, et on filtre le signal d'excitation au moyen d'un filtre de synthèse (22) pour obtenir un signal audio décodé ($\tilde{\Sigma}_n(t)$),

    et dans lequel on effectue une analyse par prédiction linéaire sur la base du signal audio décodé obtenu jusqu'à la trame précédente pour estimer au moins en partie un filtre de synthèse relativement à la trame courante, les filtres de synthèse successivement utilisés pour filtrer le signal d'excitation tant qu'aucune trame n'est effacée étant conformes aux filtres de synthèse estimés,

    **caractérisé en ce que**, si une trame $n_0$ est effacée, on détermine au moins un filtre de synthèse utilisé pour filtrer le signal d'excitation relatif à une trame subséquente $n_0+i$ par une combinaison pondérée du filtre de synthèse estimé relativement à la trame $n_0+i$ et d'au moins un filtre de synthèse qui a été utilisé depuis la trame $n_0$.

2. Procédé selon la revendication 1, dans lequel, si la trame $n_0+1$ suivant une trame effacée $n_0$ est également une trame effacée, on détermine le filtre de synthèse utilisé pour filtrer le signal d'excitation relatif à la trame $n_0+1$ à partir du filtre de synthèse utilisé pour filtrer le signal d'excitation relatif à la trame n.

3. Procédé selon la revendication 1 ou 2, dans lequel des coefficients de pondération ($\alpha(i), 1-\alpha(i)$) employés dans ladite combinaison pondérée dépendent du nombre i de trames séparant la trame $n_0+i$ de la dernière trame effacée $n_0$, de façon que le filtre de synthèse utilisé se rapproche progressivement du filtre de synthèse estimé.

4. Procédé selon la revendication 3, dans lequel chaque filtre de synthèse utilisé pour filtrer le signal d'excitation relatif à une trame n est représenté par K paramètres $P^k(n)$ ($1 \leq k \leq K$), et dans lequel les paramètres $P^k(n_0+i)$ du filtre de synthèse utilisé pour filtrer le signal d'excitation relatif à une trame $n_0+i$, faisant suite à i-1 trames valides ($i \geq 1$) précédées par une trame effacée $n_0$, sont calculés selon la combinaison:

$$P^k(n_0+i) \;=\; [1-\alpha(i)].\tilde{P}^k(n_0+i) \;+\; \alpha(i).P^k(n_0)$$

où $\tilde{e}^k(n_0+i)$ désigne le k-ième paramètre du filtre de synthèse estimé relativement à la trame $n_0+i$, et $\alpha(i)$ est un coefficient pondérateur positif ou nul, décroissant avec i à partir d'une valeur $\alpha(1)=\alpha_{max}$ au plus égale à 1.

5. Procédé selon la revendication 4, dans lequel $\alpha_{max}=1$.

6. Procédé selon la revendication 4 ou 5, dans lequel le coefficient $\alpha(i)$ pour i>1 est calculé par la récurrence $\alpha(i) = \max\{0, \alpha(i-1)-\beta\}$, $\beta$ étant un coefficient compris entre 0 et 1.

**7.** Procédé selon l'une quelconque des revendications 1 à 6, dans lequel les coefficients de pondération employés dans ladite combinaison pondérée dépendent d'une estimation d'un degré de stationnarité spectrale du signal audio ($I_{stat}(n)$), de façon que, dans le cas d'un signal faiblement stationnaire, le filtre de synthèse utilisé pour filtrer le signal d'excitation relatif à une trame $n_0+i$ suivant une trame effacée $n_0$ ($i \geq 1$) soit plus proche du filtre de synthèse estimé que dans le cas d'un signal fortement stationnaire.

**8.** Procédé selon la revendication 7, dans lequel le degré de stationnarité spectrale du signal audio ($I_{stat}(n)$) est estimé à partir d'une information incluse dans chaque trame valide du flux binaire.

**9.** Procédé selon la revendication 7, dans lequel le degré de stationnarité spectrale du signal audio ($I_{stat}(n)$) est estimé à partir d'une analyse comparative des filtres de synthèse successivement utilisés pour filtrer le signal d'excitation.

**10.** Procédé selon la revendication 4 et l'une quelconque des revendications 7 à 9, dans lequel le coefficient pondérateur $\alpha(i)$ pour $i>1$ est une fonction croissante du degré de stationnarité spectrale estimé du signal audio ($I_{stat}(n)$).

**11.** Procédé selon les revendications 6 et 10, dans lequel le coefficient $\beta$ est une fonction décroissante du degré de stationnarité spectrale estimé du signal audio ($I_{stat}(n)$).

**12.** Procédé selon la revendication 11, dans lequel le degré de stationnarité spectrale du signal audio ($I_{stat}(n)$) est estimé de façon binaire, le coefficient $\beta$ prenant la valeur 0,5 ou 0,1 selon le degré de stationnarité spectrale estimé.

**13.** Procédé selon l'une quelconque des revendications 1 à 12, dans lequel le filtre de synthèse (22) a une fonction de transfert de la forme $1/A_B(z)$, où $A_B(z)$ est un polynôme en $z^{-1}$ dont les coefficients ($P_B^k(n)$) sont obtenus à partir de ladite analyse par prédiction linéaire portant sur le signal audio décodé ($\tilde{S}_n(t)$).

**14.** Procédé selon l'une quelconque des revendications 1 à 12, dans lequel le filtre de synthèse (22) a une fonction de transfert de la forme $1/[A_F(z).A_B(z)]$, où $A_F(z)$ et $A_B(z)$ sont des polynômes en $z^{-1}$, les coefficients ($P_F^k(n)$) du polynôme $A_F(z)$ étant obtenus à partir de paramètres ($Q(n)$) inclus dans les trames valides du flux binaire, et les coefficients ($P_B^k(n)$) du polynôme $A_B(z)$ étant obtenus à partir de ladite analyse par prédiction linéaire portant sur un signal obtenu en filtrant le signal audio décodé ($\tilde{S}_n(t)$) par un filtre de fonction de transfert $A_F(z)$.

**15.** Procédé de décodage d'un flux binaire (F) représentatif d'un signal audio ($S_n(t)$) codé par trames successives, le flux binaire étant reçu avec une information (BFI) indiquant d'éventuelles trames effacées, chaque trame valide du flux binaire incluant une information ($d(n)$) indiquant quel mode de codage a été appliqué pour coder le signal audio relatif à la trame parmi un premier mode de codage, dans lequel la trame contient des paramètres spectraux ($Q(n)$), et un second mode de codage, dans lequel la trame ne contient pas de paramètres spectraux,

dans lequel, pour chaque trame, on forme un signal d'excitation ($\tilde{E}^k(n)$) à partir de paramètres d'excitation (EX($n$)) qui sont récupérés dans le flux binaire si la trame est valide et estimés d'une autre manière si la trame est effacée, et on filtre le signal d'excitation au moyen d'un filtre de synthèse (22) pour obtenir un signal audio décodé ($\tilde{S}_n(t)$),

le filtre de synthèse utilisé pour filtrer le signal d'excitation étant construit à partir desdits paramètres spectraux si le flux binaire indique le premier mode de codage,

dans lequel on effectue une analyse par prédiction linéaire sur la base du signal audio décodé obtenu jusqu'à la trame précédente pour estimer au moins en partie un filtre de synthèse relativement à la trame courante, et dans lequel, tant qu'aucune trame n'est effacée et que le flux binaire indique le second mode de codage, les filtres de synthèse successivement utilisés pour filtrer le signal d'excitation sont conformes aux filtres de synthèse estimés,

**caractérisé en ce que**, si une trame $n_0$ est effacée, le flux binaire ayant indiqué le second mode de codage pour la précédente trame valide, la trame $n_0$ étant suivie par plusieurs trames valides pour lesquelles le flux binaire indique le second mode de codage, on détermine au moins un filtre de synthèse utilisé pour filtrer le signal d'excitation relatif à une trame subséquente $n_0+i$ par une combinaison pondérée du filtre de synthèse estimé relativement à la trame $n_0+i$ et d'au moins un filtre de synthèse qui a été utilisé depuis la trame $n_0$.

**16.** Procédé selon la revendication 15, dans lequel, si une trame $n_0$ est effacée et suivie par au moins une trame valide pour laquelle le flux binaire indique le second mode de codage, on détermine le filtre de synthèse utilisé pour filtrer le signal d'excitation relatif à la trame suivante $n_0+1$ à partir du filtre de synthèse estimé relativement à la trame $n_0$.

**17.** Procédé selon la revendication 15 ou 16, dans lequel, si deux trames consécutives $n_0$ et $n_0+1$ sont toutes deux des trames effacées, le flux binaire ayant indiqué le second mode de codage pour la précédente trame valide, on détermine le filtre de synthèse utilisé pour filtrer le signal d'excitation relatif à la trame $n_0+1$ à partir du filtre de synthèse utilisé pour filtrer le signal d'excitation relatif à la trame $n_0$.

**18.** Procédé selon l'une quelconque des revendications 15 à 17, dans lequel des coefficients de pondération ($\alpha(i), 1-\alpha(i)$) employés dans ladite combinaison pondérée dépendent du nombre i de trames séparant la trame $n_0+i$ de la dernière trame effacée $n_0$, de façon que le filtre de synthèse utilisé se rapproche progressivement du filtre de synthèse estimé.

**19.** Procédé selon la revendication 18, dans lequel chaque filtre de synthèse utilisé pour filtrer le signal d'excitation relatif à une trame n pour laquelle le flux binaire indique le second mode de codage est représenté par K paramètres $P^k(n)$ ($1 \leq k \leq K$), et dans lequel les paramètres $P^k(n_0+i)$ du filtre de synthèse utilisé pour filtrer le signal d'excitation relatif à une trame $n_0+i$ pour laquelle le flux binaire indique le second mode de codage, faisant suite à i-1 trames valides ($i \geq 1$) précédées par une trame effacée $n_0$, sont calculés selon la combinaison:

$$P^k(n_0+i) = [1-\alpha(i)].\tilde{P}^k(n_0+i) + \alpha(i).P^k(n_0)$$

où $\tilde{P}^k(n_0+i)$ désigne le k-ième paramètre du filtre de synthèse estimé relativement à la trame $n_0+i$, et $\alpha(i)$ est un coefficient pondérateur positif ou nul, décroissant avec i à partir d'une valeur $\alpha(1)=\alpha_{max}$ au plus égale à 1.

**20.** Procédé selon la revendication 19, dans lequel $\alpha_{max}=1$.

**21.** Procédé selon la revendication 19 ou 20, dans lequel le coefficient $\alpha(i)$ pour i>1 est calculé par la récurrence $\alpha(i) = \max\{0, \alpha(i-1)-\beta\}$, $\beta$ étant un coefficient compris entre 0 et 1.

**22.** Procédé selon l'une quelconque des revendications 15 à 21, dans lequel les coefficients de pondération employés dans ladite combinaison pondérée dépendent d'une estimation ($I_{stat}(n)$) d'un degré de stationnarité spectrale du signal audio, de façon que, dans le cas d'un signal faiblement stationnaire, le filtre de synthèse utilisé pour filtrer le signal d'excitation relatif à une trame $n_0+i$ suivant une trame effacée $n_0$, et pour laquelle le flux binaire indique le second mode de codage ($i \geq 1$), soit plus proche du filtre de synthèse estimé que dans le cas d'un signal fortement stationnaire.

**23.** Procédé selon la revendication 22, dans lequel le degré de stationnarité spectrale du signal audio ($I_{stat}(n)$) est estimé à partir d'une information ($d(n)$) incluse dans chaque trame valide du flux binaire (F).

**24.** Procédé selon la revendication 23, dans lequel ladite information à partir de laquelle est estimé le degré de stationnarité spectrale du signal audio ($I_{stat}(n)$) est l'information ($d(n)$) indiquant le mode de codage du signal audio.

**25.** Procédé selon la revendication 24, dans lequel le degré de stationnarité spectrale estimé ($I_{stat}(n)$) est déduit d'un décompte de trames traitées selon le second mode de codage et de trames traitées selon le premier mode de codage, appartenant à une fenêtre temporelle précédant la trame courante et ayant une durée de l'ordre de N trames, N étant un entier prédéfini.

**26.** Procédé selon la revendication 25, dans lequel le degré de stationnarité spectrale ($I_{stat}(n)$) est estimé de façon récursive à l'aide de deux compteurs, l'un dont la valeur $N_0$ est incrémentée pour chaque trame traitée selon le premier mode de codage, et l'autre dont la valeur $N_1$ est incrémentée pour chaque trame traitée selon le second mode de codage, les valeurs des deux compteurs étant diminuées conjointement lorsque la somme de ces deux valeurs atteint le nombre N, le degré de stationnarité spectrale estimé étant une fonction croissante du rapport $N_1/N_0$.

**27.** Procédé selon la revendication 26, dans lequel le degré de stationnarité spectrale estimé ($I_{stat}(n)$) est une fonction binaire du rapport $N_1/N_0$.

**28.** Procédé selon la revendication 22, dans lequel le degré de stationnarité spectrale du signal audio ($I_{stat}(n)$) est estimé à partir d'une analyse comparative des filtres de synthèse successivement utilisés pour filtrer le signal d'excitation ($\tilde{\varepsilon}^k(n)$).

**29.** Procédé selon la revendication 19 et l'une quelconque des revendications 22 à 28, dans lequel le coefficient pondérateur $\alpha(i)$ pour i>1 est une fonction croissante du degré de stationnarité spectrale estimé du signal audio ($I_{stat}$(n)).

**30.** Procédé selon les revendications 21 et 29, dans lequel le coefficient $\beta$ est une fonction décroissante du degré de stationnarité spectrale estimé du signal audio ($I_{stat}$(n)).

**31.** Procédé selon les revendications 27 et 30, dans lequel le coefficient $\beta$ prend la valeur 0,5 ou 0,1 selon le degré de stationnarité spectrale estimé ($I_{stat}$(n)).

**32.** Procédé selon l'une quelconque des revendications 15 à 31, dans lequel le filtre de synthèse utilisé lorsque le flux binaire indique le second mode de codage a une fonction de transfert de la forme $1/A_B(z)$, où $A_B(z)$ est un polynôme en $z^{-1}$ dont les coefficients ($P_B^k$(n)) sont obtenus à partir de ladite analyse par prédiction linéaire portant sur le signal audio décodé ($\tilde{\Sigma}_n$(t)).

**33.** Procédé selon l'une quelconque des revendications 15 à 31, dans lequel le filtre de synthèse utilisé lorsque le flux binaire indique le second mode de codage a une fonction de transfert de la forme $1/[A_F(z).A_B(z)]$, où $A_F(z)$ et $A_B$(z) sont des polynômes en $z^{-1}$, les coefficients ($P_F^k$(n)) du polynôme $A_F(z)$ étant obtenus à partir de paramètres (Q(n)) inclus dans les trames valides du flux binaire, et les coefficients ($P_B^k$(n)) du polynôme $A_B(z)$ étant obtenus à partir de ladite analyse par prédiction linéaire portant sur un signal obtenu en filtrant le signal audio décodé ($\tilde{\Sigma}_n$(t)) par un filtre de fonction de transfert $A_F(z)$.

**Patentansprüche**

**1.** Verfahren zur Decodierung eines für ein Audiosignal ($S_n$(t)) repräsentativen binären Flusses (F), das durch aufeinander folgende Datenblöcke codiert ist, wobei der binäre Fluss mit einer Information (BFI) empfangen wird, die mögliche gelöschte Datenblöcke angibt, bei dem man für jeden Datenblock ein Triggersignal ($E^k$(n)) ausgehend von Triggerparametern (EX(n)) bildet, die, wenn der Datenblock gültig ist, in dem binären Fluss wieder gewonnen werden und die, wenn der Datenblock gelöscht ist, auf eine andere Art geschätzt werden, und wobei man das Triggersignal mithilfe eines Synthesefilters (22) filtert, um ein decodiertes Audiosignal ($\Sigma_n$(t)) zu erhalten, und bei dem man eine Analyse durch lineare Vorhersage aufgrund des decodierten Audiosignals durchführt, das bis zum vorhergehenden Datenblock erhalten wurde, um ein Synthesefilter bezogen auf den laufenden Datenblock wenigstens teilweise zu schätzen, wobei die nacheinander benutzten Synthesefilter zum Filtern des Triggersignals mit den geschätzten Synthesefiltern im Einklang stehen, solange kein Datenblock gelöscht ist,
**dadurch gekennzeichnet, dass**
man, wenn ein Datenblock $n_0$ gelöscht ist, wenigstens ein Synthesefilter bestimmt, das dazu benutzt wird, um das auf einen nachfolgenden Datenblock $n_0$+i bezogene Triggersignal durch eine gewichtete Kombination des geschätzten, auf den Datenblock $n_0$+i bezogenen Synthesefilters mit wenigstens einem, seit dem Datenblock $n_0$ benutzten, Synthesefilter zu filtern.

**2.** Verfahren nach Anspruch 1, bei dem man, wenn der Datenblock $n_0$ + 1, der einem gelöschten Datenblock $n_0$ folgt, auch ein gelöschter Datenblock ist, das Synthesefilter bestimmt, der benutzt wird, um das auf den Datenblock $n_0$ + 1 bezogene Triggersignal zu filtern, ausgehend vom Synthesefilter, der benutzt wird, um das auf den Datenblock $n_0$ bezogene Triggersignal zu filtern.

**3.** Verfahren nach Anspruch 1 oder 2, bei dem die Gewichtungskoeffizienten ($\alpha(i)$, 1-$\alpha(i)$), die in der oben genannten gewichteten Kombination verwendet werden, von der Anzahl i der Datenblöcke abhängen, die den Datenblock $n_0$ + i von dem letzten gelöschten Datenblock $n_0$ trennen, derart, dass das benutzte Synthesefilter dem geschützten Synthesefilter zunehmend näher kommt.

**4.** Verfahren nach Anspruch 3, bei dem jedes Synthesefilter, der zum Filtern des auf einen Datenblock n bezogenen Triggersignals benutzt wird, durch K Parameter $P^k$(n) mit $(1)\langle k\langle K)$ dargestellt ist, und bei dem die Parameter $P^k$($n_0$+i) des Synthesefilters, das zum Filtern des auf einen Datenblock $n_0$+i bezogenen Triggersignals benutzt wird, wobei der Datenblock $n_0$+i auf i-1 gültige Datenblöcke (i≥1) folgt, vor denen ein gelöschter Datenblock $n_0$ ist, gemäß der Kombination berechnet werden:

$$P^*(n_0 + i) = [1 - \alpha(i)] \cdot \widetilde{P}^*(n_0 + i) + \alpha(i) \cdot P^*(n_0)$$

wobei $\widetilde{P}^k(n_0+i)$ den k-ten Parameter des geschätzten Synthesefilters bezogen auf den Datenblock $n_0+i$ bezeichnet und $\alpha(i)$ ein Gewichtungskoeffizient positiv oder gleich Null ist, der mit i von einem Wert $\alpha(1)=\alpha_{max}$ an bis höchstens gleich 1 abnimmt.

**5.** Verfahren nach Anspruch 4, bei dem $\alpha_{max} = 1$.

**6.** Verfahren nach Anspruch 4 oder 5, bei dem der Koeffizient $\alpha(i)$ für i)1 durch die Rekursion $\alpha(i) = \max\{0, \alpha(i-1)-\beta\}$ berechnet wird, wobei $\beta$ ein Koeffizient zwischen 0 und 1 ist.

**7.** Verfahren nach einem der Ansprüche 1 bis 6, bei dem die Gewichtungskoeffizienten, die in oben genannter gewichteter Kombination angewendet werden, von einer Schätzung eines Grades des spektralen stationären Zustands des Audiosignals ($I_{stat}(n)$) abhängen, derart, dass in dem Fall eines schwach stationären Signals, das Synthesefilter, das zum Filtern des Triggersignals bezogen auf einen Datenblock $n_0+i$, der einem gelöschten Datenblock $n_0$ (i≥1) folgt, näher an dem geschätzten Synthesefilter ist als in dem Fall eines stark stationären Signals.

**8.** Verfahren nach Anspruch 7, bei dem der Grad des spektralen stationären Zustands des Audiosignals ($I_{stat}(n)$) ausgehend von einer Information geschätzt wird, die in jedem gültigen Datenblock des binären Flusses enthalten Ist.

**9.** Verfahren nach Anspruch 7, bei dem der Grad des spektralen stationären Zustands des Audiosignals ($I_{stat}(n)$) ausgehend von einer vergleichenden Analyse der aufeinander folgenden Synthesefilter geschätzt wird, die zum Filtern des Triggersignals verwendet werden.

**10.** Verfahren nach Anspruch 4 und einem der Ansprüche 7 bis 9, bei dem der Gewichtungskoeffizient $\alpha(i)$ mit i>1 eine wachsende Funktion des Grads des geschätzten spektralen stationären Zustands des Audiosignals ($I_{stat}(n)$) ist.

**11.** Verfahren nach Ansprüchen 6 und 10, bei dem der Koeffizient $\beta$ eine abnehmende Funktion des Grads des geschätzten spektralen stationären Zustands des Audiosignals ($I_{stat}(n)$) ist.

**12.** Verfahren nach Anspruch 11, bei dem der Grad des spektralen stationären Zustands des Audiosignals ($I_{stat}(n)$) auf binäre Art und Weise geschätzt wird, wobei der Koeffizient $\beta$ entsprechend dem Grad des geschätzten spektralen stationären Zustands den Wert 0,5 oder 0,1 annimmt.

**13.** Verfahren nach einem der Ansprüche 1 bis 12, bei dem das Synthesefilter (22) eine Transferfunktion der Form $1/A_B(z)$ hat, wobei $A_B(z)$ ein Polynom in $z^{-1}$ ist, dessen Koeffizienten ($P_B{}^k(n)$) ausgehend von der Analyse durch linearen Vorhersage bezüglich des decodierten Audiosignal ($\widetilde{S}n(t)$) erhalten werden.

**14.** Verfahren nach einem der Ansprüche 1 bis 12, bei dem das Synthesefilter (22) eine Transferfunktion der Form $1/[A_F(z) \cdot A_B(z)]$ hat, wobei $A_F(z)$ und $A_B(z)$ Polynome in $z^{-1}$ sind, wobei die Koeffizienten ($P_F{}^k(n)$) des Polynoms $A_F(z)$ ausgehend von den Parametern ($Q(n)$), die in den gültigen Datenblöcken des binären Flusses enthalten sind, erhalten werden und wobei die Koeffizienten ($P_B{}^k(n)$) des Polynoms $A_B(z)$ ausgehend von der Analyse durch lineare Vorhersage bezüglich eines Signals erhalten werden, das durch Filtern des decodierten Audiosignals ($\widetilde{S}_n(t)$) durch ein Filter der Übertragungsfunktion $A_F(z)$ erhalten wird.

**15.** Verfahren zur Decodierung eines binären Flusses (F), der ein Audiosignal ($S_n(t)$) dargestellt, das durch aufeinander folgende Datenblöcke codiert wird, wobei der binäre Fluss mit einer Information (BFI) empfangen wird, die etwaige gelöschte Datenblöcke anzeigt, wobei jeder gültige Datenblock des binären Flusses eine Information ($d(n)$) enthält, die anzeigt, welcher Mode der Codierung angewendet wurde, um das Audiosignal zu codieren, bezogen auf den Datenblock zwischen einem ersten Mode der Codierung, in welchem der Datenblock die spektralen Parameter ($Q(n)$) umfasst, und einem zweiten Mode der Codierung, in dem man für jeden Datenblock ein Triggersignal ($\widetilde{E}^k(n)$) ausgehend von den Triggerparametern ($EX(n)$) bildet, die in dem binären Fluss wiedergewonnen werden, wenn der Datenblock gültig ist, und, die auf eine andere Art und Weise geschätzt werden, wenn der Datenblock gelöscht ist, und bei dem man das Triggersignal mit Hilfe eines Synthesefilters (22) filtert, um ein decodiertes Audiosignal ($\tilde{\Sigma}_n(t)$) zu erhalten,

wobei das Synthesefilter, das zum Filtern des Triggersignals benutzt wird, ausgehend von den spektralen Parametern gebildet wird, wenn der binäre Fluss den ersten Mode der Codierung anzeigt,

bei dem man eine Analyse durch lineare Vorhersage auf der Basis des decodierten Audiosignals durchführt, das bis zum vorhergehenden Datenblock erhalten wurde, um wenigstens teilweise ein Synthesefilter in Bezug auf den laufenden Datenblock zu schätzen und bei dem, so lange kein Datenblock gelöscht ist und der binäre Fluss den zweiten Mode der Codierung anzeigt, die aufeinander folgenden Synthesefilter, die zum Filtern des Triggersignals benutzt werden, mit den geschätzten Synthesefiltern konform sind,

**dadurch gekennzeichnet, dass**, wenn ein Datenblock $n_0$ gelöscht ist, man zumindest ein Synthesefilter bestimmt, das zum Filtern des auf einen nachfolgenden Datenblock $n_0+i$ bezogenen Triggersignals durch eine gewichtete Kombination des auf den Datenblock $n_0+i$ bezogenen, geschätzten Synthesefilters mit zumindest einem bis zum Datenblock $n_0$ verwendeten Synthesefilter, verwendet wird, wobei der binäre Fluss den zweiten Mode der Codierung für den vorhergehenden gültigen Datenblock angezeigt und dem Datenblock $n_0$ mehrere gültige Datenblöcke folgen, für die der binäre Fluss den zweiten Mode der Codierung anzeigt.

16. Verfahren nach Anspruch 15, bei dem man, wenn ein Datenblock $n_0$ gelöscht ist und von mindestens einem gültigen Datenblock, für den der binäre Fluss den zweiten Mode der Codierung anzeigt, gefolgt wird, einen Synthesefilter bestimmt, der zum Filtern des auf den nachfolgenden Datenblock $n_0+1$ bezogenen Triggersignals verwendet wird, ausgehend von dem auf den Datenblock $n_0$ bezogenen, geschätzten Synthesefilter.

17. Verfahren nach Anspruch 15 oder 16, bei dem man, wenn zwei aufeinander folgende Datenblöcke $n_0$ und $n_0+1$ gelöscht sind, der binäre Fluss, der den zweiten Mode der Codierung für die vorhergehenden gültigen Datenblöcke angezeigt hat, das Synthesefilter bestimmt, das zum Filtern des auf den Datenblock $n_0+1$ bezogenen Triggersignals benutzt wird, ausgehend von dem Synthesefilter, das zum Filtern des auf den Datenblock $n_0$ bezogenen Triggersignals benutzt wird.

18. Verfahren nach einem der Ansprüche 15 bis 17, bei dem die Gewichtungskoeffizienten ($\alpha(i)$, $1-\alpha(i)$), die in der oben genannten gewichteten Kombination angewendet werden, von der Anzahl i der Datenblöcke abhängen, die den Datenblock $n_0+i$ von den letzten gelöschten Datenblock $n_0$ trennen, derart, dass das angewendete Synthesefilter sich nach und nach dem geschätzten Synthesefilter annähert.

19. Verfahren nach Anspruch 18, bei dem jedes Synthesefilter, das zum Filtern des Triggersignals in Bezug auf einen Datenblock n, für den der binäre Fluss den zweiten Mode der Codierung anzeigt, verwendet wird, durch K-Parameter $P^k(n)$ mit ($1 < k < K$) dargestellt wird, und bei dem die Parameter $P^k(n_0+i)$ des Synthesefilters, das zum Filtern des Triggersignals in Bezug auf einen Datenblock $n_0+i$ verwendet wird, für den der binäre Fluss den zweiten Mode der Codierung anzeigt, wobei der Datenblock $n_0+i$ auf I-1 gürtige Datenblöcke ($i>1$) folgt, vor denen ein gelöschter Datenblock $n_0$ ist, gemäß der Kombination berechnet werden:

$$P^*(n_0+i) \;=\; [1\text{-}\alpha(i)] \cdot \tilde{P}^k(n_0+i) \;+\; \alpha^{'}(i) \cdot P^k(n_0)$$

wobei $\tilde{P}^k(n_0+i)$ den k-ten Parameter des auf den Datenblock $n_0+i$ bezogenen, geschätzten Synthesefilters darstellt und $\alpha(i)$ ein Gewichtungskoeffizient der positiv oder gleich Null ist, wobei er mit i ausgehend von einem Wert $\alpha(1)$ = $\alpha_{max}$ auf höchstens gleich 1 abfällt.

20. Verfahren nach Anspruch 19, bei dem $\alpha_{max}$ = 1.

21. Verfahren nach Anspruch 19 oder 20, bei dem der Koeffizient $\alpha(i)$ für $i>1$ durch die Rekursion $\alpha(i)$ = max$\{0, \alpha(i-1)-\beta\}$ berechnet wird, wobei $\beta$ ein Koeffizient zwischen 0 und 1 ist.

22. Verfahren nach einem der Ansprüche 15 bis 21, bei dem die Koeffizienten der Gewichtung, die in der oben erwähnten gewichteten Kombination angewendet werden, von einer Schätzung ($I_{stat}(n)$) eines Grads des spektralen stationären Zustands des Audiosignals abhängen, derart, dass im Falle eines schwach stationären Signals das Synthesefilter, das zum Filtern des Triggersignals in Bezug auf einen Datenblock $n_0+i$ der einem gelöschten Datenblock $n_0$ folgt, angewendet wird und, der für denjenigen binären Fluss, der den zweiten Mode der Codierung ($i \geq 1$) anzeigt, näher an das geschätzte Synthesefilter herankommt als in dem Fall eines stark stationären Signals.

**23.** Verfahren nach Anspruch 22, bei dem der Grad des spektralen stationären Zustands des Audiosignals ($I_{stat}(n)$) ausgehend von einer Information ($d(n)$) geschützt wird, die in jedem gültigen Datenblock des binären Flusses (F) enthalten ist.

**24.** Verfahren nach Anspruch 23, bei dem die Information, ausgehend von der der Grad des spektralen stationären Zustands des Audiosignals ($I_{stat}(n)$) geschätzt wird, die Information ($d(n)$) ist, die den Mode der Codierung des Audiosignals anzeigt.

**25.** Verfahren nach Anspruch 24, bei dem der Grad des geschätzten spektralen stationären Zustands ($I_{stat}(n)$) von einem Nachzählen der gemäß dem zweiten Mode der Codierung behandelten Datenblöcke und der gemäß dem ersten Mode der Codierung behandelten Datenblöcke hergeleitet wird, wobei diese in einem zeitlichen Fenster, das dem laufenden Datenblock vorhergeht, erscheinen und eine Dauer der Ordnung N-Datenblöcke besitzen, wobei N eine ganze vordefinierte Zahl ist.

**26.** Verfahren nach Anspruch 25, bei dem der Grad des spektralen stationären Zustands ($I_{stat}(n)$) mit Hilfe zweier Zähler regressiv geschätzt wird, wobei der eine, dessen Wert $N_0$ ist, für jeden gemäß dem ersten Mode der Codierung behandelten Datenblock inkrementiert wird und der andere, dessen Wert $N_1$ ist, für jeden gemäß dem zweiten Mode der Codierung behandelten Datenblock inkrementiert wird, wobei die Werte der zwei Zähler gemeinsam verringert werden, wenn die Summe dieser zwei Werte die Zahl N annimmt, wobei der geschätzte Grad des spektralen stationären Zustands eine im Verhältnis $N_1/N_0$ wachsende Funktion ist.

**27.** Verfahren nach Anspruch 26, bei dem der geschätzte Grad des spektralen stationären Zustands ($I_{stat}(n)$) eine binäre Funktion des Verhältnisses $N_1/N_0$ ist.

**28.** Verfahren nach Anspruch 22, bei dem der Grad des spektralen stationären Zustands des Audiosignals ($I_{stat}(n)$) geschätzt wird ausgehend von einer vergleichenden Analyse der Synthesefilter, die nacheinander zum Filtern des Triggersignals ($E^k(n)$) benutzt werden.

**29.** Verfahren nach Anspruch 19 und einem der Ansprüche 22 bis 28, bei dem der Gewichtungskoeffizient $\alpha(i)$ für $i > 1$ eine wachsende Funktion des geschätzten Grads des spektralen stationären Zustands des Audiosignals ($I_{stat}(n)$) ist.

**30.** Verfahren nach den Ansprüchen 21 und 29, bei dem der Koeffizient $\beta$ eine abfallende Funktion des geschätzten Grads des spektralen stationären Zustands des Audiosignals ($I_{stat}(n)$) ist.

**31.** Verfahren nach den Ansprüchen 27 und 30, bei dem der Koeffizient $\beta$ entsprechend dem geschätzten Grad des spektralen stationären Zustands ($I_{stat}(n)$)den Wert 0,5 oder 0,1 besitzt.

**32.** Verfahren nach einem der Ansprüche 15 bis 31, bei dem das Synthesefilter, das angewendet wird, wenn der binäre Fluss den zweiten Mode der Codierung anzeigt, eine Transferfunktion der Form $1/A_B(z)$ hat, wobei $A_B(z)$ ein Polynom in $z^{-1}$ ist, dessen Koeffizienten ($P_B^k(n)$) ausgehend von der Analyse durch lineare Vorhersage bezüglich des decodierten Audiosignal ($\tilde{\Sigma}_n(t)$) erhalten werden.

**33.** Verfahren nach einem der Ansprüche 15 bis 31, bei dem der Synthesefilter, der angewendet wird, wenn der binäre Fluss den zweiten Mode der Codierung anzeigt, eine Transferfunktion der Form $1/[A_F(z) \cdot A_B(z)]$ hat, wobei $A_F(z)$ und $A_B(z)$ Polynome in $z^{-1}$ sind, wobei die Koeffizienten ($P_F^k(n)$) des Polynoms $A_F(z)$ ausgehend von den Parametern ($Q(n)$) erhalten werden, die in den gültigen Datenblöcken des binären Flusses enthalten sind, und wobei die Koeffizienten ($P_B^k(n)$) des Polynoms $A_B(z)$ ausgehend von der Analyse durch lineare Vorhersage bezüglich des Signals erhalten werden, das beim Filtern des decodierten Audiosignals($\tilde{\Sigma}_n(t)$) durch ein Filter der Übertragungsfunktion $A_F(z)$ erhalten wird.

**Claims**

**1.** A method of decoding a bit stream (F) representative of an audio signal ($S_n(t)$) coded by successive frames, the bit stream being received with a flag (BFI) indicating any missing frames,

wherein, for each frame, an excitation signal ($E^k(n)$) is formed from excitation parameters (EX(n)) which are recovered in the bit stream if the frame is valid and estimated some other way if the frame is missing, and the excitation signal is filtered by means of a synthesis filter (22) to obtain a decoded audio signal ($\sum_n(t)$),

and wherein a linear prediction analysis is performed on the basis of the decoded audio signal obtained up to the preceding frame to estimate at least in part a synthesis filter relating to the current frame, the successive synthesis filters used to filter the excitation signal as long as there is no missing frame conforming to the estimated synthesis filters,

**characterised in that**, if a frame $n_0$ is missing, at least one synthesis filter used to filter the excitation signal relative to a subsequent frame $n_0+i$ is determined by a weighted combination of the synthesis filter estimated in relation to frame $n_0+i$ and at least one synthesis filter that has been used since frame $n_0$.

2. A method according to claim 1 wherein, if frame $n_0+1$ following a missing frame $n_0$ is also missing, the synthesis filter used to filter the excitation signal relating to frame $n_0+1$ is determined from the synthesis filter used to filter the excitation signal relating to frame $n_0$.

3. A method according to claim 1 or claim 2 wherein weighting coefficients ($\alpha(i)$, $1-\alpha(i)$) used in said weighted combination depend on the number i of frames between frame $n_0+i$ and the last missing frame $n_0$ so that the synthesis filter used progressively approaches the estimated synthesis filter.

4. A method according to claim 3 wherein each synthesis filter used to filter the excitation signal relating to a frame n is represented by K parameters $P^k(n)$ ($1 \leq k \leq K$) and wherein the parameters $P^k(n_0+i)$ of the synthesis filter used to filter the excitation signal relating to a frame $n_0+i$, following $i-1$ valid frames ($i \geq 1$) preceded by a missing frame $n_0$, are calculated from the equation:

$$P^k(n_0+i) = [1-\alpha(i)].p^k(n_0+i) + \alpha(i).P^k(n_0)$$

where $P^k(n_0+i)$ is the $k^{th}$ parameter of the synthesis filter estimated in relation to frame $n_0+i$ and $\alpha(i)$ is a positive or zero weighting coefficient decreasing with i from a value $\alpha(1)=\alpha_{max}$ at most equal to 1.

5. A method according to claim 4 wherein $\alpha(1)=\alpha_{max}$.

6. A method according to claim 4 or claim 5 wherein the coefficient $\alpha(i)$ for $i>1$ is calculated from the equation $\alpha(i) = $ max $\{0, \alpha(i-1)-\beta\}$ where $\beta$ is a coefficient in the range from 0 to 1.

7. A method according to any one of claims 1 to 6 wherein the weighting coefficients employed in said weighted combination depend on an estimate ($I_{stat}(n)$) of the degree to which the spectrum of the audio signal is stationary so that, in the case of a weakly stationary signal, the synthesis filter used to filter the excitation signal relating to a frame $n_0+i$ following a missing frame $n_0$ ($i \geq 1$) is closer to the estimated synthesis filter than in the case of a highly stationary signal.

8. A method according to claim 7 wherein the degree to which the spectrum of the audio signal is stationary ($I_{stat}(n)$) is estimated from information contained in each valid frame of the bit stream.

9. A method according to claim 7 wherein the degree to which the spectrum of the audio signal is stationary ($I_{stat}(n)$) is estimated from a comparative analysis of the successive synthesis filters used to filter the excitation signal.

10. A method according to claim 4 and any one of claims 7 to 9 wherein the weighting coefficient $\alpha(i)$ for $i>1$ is an increasing function of the estimated degree to which the spectrum of the audio signal is stationary ($I_{stat}(n)$).

11. A method according to claims 6 and 10 wherein the coefficient $\beta$ is a decreasing function of the estimated degree to which the spectrum of the audio signal is stationary ($I_{stat}(n)$).

12. A method according to claim 11, wherein the degree to which the spectrum of the audio signal is stationary ($I_{stat}(n)$) is estimated in a binary manner, the coefficient $\beta$ taking the value 0.5 or 0.1 according to the estimate.

13. A method according to any one of claims 1 to 12 wherein the synthesis filter (22) has a transfer function of the form $1/A_B(z)$ where $A_B(z)$ is a polynomial in $z^{-1}$ whose coefficients ($P_B{}^k(n)$) are obtained from said linear prediction analysis applied to the decoded audio signal ($\Sigma_n(t)$).

**14.** A method according to any one of claims 1 to 12 wherein the synthesis filter (22) has a transfer function of the form $1/[A_F(z).A_B(z)]$ where $A_F(z)$ and $A_B(z)$ are polynomials in $z^{-1}$, the coefficients $(P_B{}^k(n))$ of the polynomial $A_F(z)$ being obtained from parameters $(Q(n))$ included in valid frames of the bit stream and the coefficients $(P_B{}^k(n))$ of the polynomial $A_B(z)$ being obtained from said linear prediction analysis applied to a signal obtained by filtering the decoded audio signal $(\Sigma_n(t))$ using a filter with the transfer function $A_F(z)$.

**15.** A method of decoding a bit stream (F) representative of an audio signal $(S_n(t))$ coded by successive frames, the bit stream being received with a flag (BFI) indicating any missing frames, each valid frame of the bit stream including an indication $(d(n))$ of which coding mode was applied to code the audio signal relating to the frame, which is either a first coding mode in which the frame contains spectral parameters $(Q(n))$ or a second coding mode,

wherein, for each frame, an excitation signal $(E^k(n))$ is formed from excitation parameters $(EX(n))$ which are recovered in the bit stream if the frame is valid and estimated some other way if the frame is missing, and the excitation signal is filtered by means of a synthesis filter (22) to obtain a decoded audio signal $(\Sigma_n(t))$,

the synthesis filter used to filter the excitation signal being constructed from said spectral parameters if the bit stream indicates the first coding mode,

and wherein a linear prediction analysis is performed on the basis of the decoded audio signal obtained up to the preceding frame to estimate at least in part a synthesis filter relating to the current frame and wherein, so long as no frame is missing and the bit stream indicates the second coding mode, the successive synthesis filters used to filter the excitation signal conform to the estimated synthesis filters,

**characterised in that**, if a frame $n_0$ is missing, the bit stream having indicated the second coding mode for the preceding valid frame and frame $n_0$ being followed by a plurality of valid frames for which the bit stream indicates the second coding mode, at least one synthesis filter used to filter the excitation signal relative to a subsequent frame $n_0+i$ is determined by a weighted combination of the synthesis filter estimated in relation to frame $n_0+i$ and at least one synthesis filter that has been used since frame $n_0$.

**16.** A method according to claim 15 wherein, if a frame $n_0$ is missing and is followed by at least one valid frame for which the bit stream indicates the second coding mode, the synthesis filter used to filter the excitation signal relative to the subsequent frame $n_0+i$ is determined from the synthesis filter estimated in relation to frame $n_0$.

**17.** A method according to claim 15 or claim 16 wherein, if two consecutive frames $n_0$ and $n_0+i$ are both missing, the bit stream having indicated the second coding mode for the preceding valid frame, the synthesis filter used to filter the excitation signal relative to frame $n_0+i$ is determined from the synthesis filter used to filter the excitation signal relative to frame $n_0$.

**18.** A method according to any one of claims 15 to 17, wherein weighting coefficients $(\alpha(i),1-\alpha(i))$ employed in said weighted combination depend on the number i of frames between frame $n_0+i$ and the last missing frame $n_0$ so that the synthesis filter used progressively approaches the estimated synthesis filter.

**19.** A method according to claim 18 wherein each synthesis filter used to filter the excitation signal relating to a frame n for which the bit stream indicates the second coding mode is represented by K parameters $P^k(n)$ $(1\leq k\leq K)$ and wherein the parameters $P^k(n_0+i)$ of the synthesis filter used to filter the excitation signal relating to a frame $n_0+i$, for which the bit stream indicates the second coding mode, following i-1 valid frames $(i\geq1)$ preceded by a missing frame $n_0$, are calculated from the equation:

$$P^k(n_0+i) = [1-\alpha(i)].P^k(n_0+i) + \alpha(i).P^k(n_0)$$

where $P^k(n_0+i)$ is the $k^{th}$ parameter of the synthesis filter estimated in relation to frame $n_0+i$ and $\alpha(i)$ is a positive or zero weighting coefficient decreasing with i from a value $\alpha(1)=\alpha_{max}$ at most equal to 1.

**20.** A method according to claim 19 wherein $\alpha_{max}=1$.

**21.** A method according to claim 19 or claim 20 wherein the coefficient $\alpha(i)$ for i>1 is calculated using the equation $\alpha(i) = \max(0, \alpha(i-1)-\beta)$, $\beta$ being a coefficient in the range from 0 to 1.

**22.** A method according to any one of claims 15 to 21 wherein the weighting coefficients employed in said weighted combination depend on an estimate $(I_{stat}(n))$ of the degree to which the spectrum of the audio signal is stationary so that, in the case of a weakly stationary signal, the synthesis filter used to filter the excitation signal relating to

a frame $n_0+i$ following a missing frame $n_0$ and for which the bit stream indicates the second mode ($i \geq 1$) is closer to the estimated synthesis filter than in the case of a strongly stationary signal.

23. A method according to claim 22 wherein the degree to which the spectrum of the audio signal is stationary ($I_{stat}$(n)) is estimated from information (d(n)) included in each valid frame of the bit stream (F).

24. A method according to claim 23 wherein said information from which the degree to which the spectrum of the audio signal is stationary ($I_{stat}$(n)) is estimated is the information (d(n)) indicating the audio signal coding mode.

25. A method according to claim 24 wherein the estimated degree to which the spectrum of the audio signal is stationary ($I_{stat}$(n)) is deduced by downcounting frames processed in the second coding mode and frames processed in the first coding mode belonging to a time window preceding the current frame and having a duration in the order of N frames, N being a predefined integer.

26. A method according to claim 25, wherein the degree to which the spectrum of the audio signal is stationary ($I_{stat}$(n)) is estimated recursively using two counters, one whose value $N_0$ is incremented for each frame processed using the first coding mode and the other whose value $N_1$ is incremented for each frame processed using the second coding mode, the values of the two counters being conjointly reduced when the sum of the two values reaches the number N, the estimated degree to which the spectrum of the audio signal is stationary being an increasing function of the ratio $N_1/N_0$.

27. A method according to claim 26 wherein the estimated degree to which the spectrum of the audio signal is stationary ($I_{stat}$(n)) is a binary function of the ratio $N_1/N_0$.

28. A method according to claim 22 wherein the degree to which the spectrum of the audio signal is stationary ($I_{stat}$(n)) is estimated from a comparative analysis of the successive synthesis filters used to filter the excitation signal ($E^k$(n)).

29. A method according to claim 19 and any one of claims 22 to 28 wherein the weighting coefficient $\alpha$(i) for i>1 is an increasing function of the estimated degree ($I_{stat}$(n)) to which the spectrum of the audio signal is stationary.

30. A method according to claims 21 and 29 wherein the coefficient $\beta$ is a decreasing function of the estimated degree ($I_{stat}$(n)) to which the spectrum of the audio signal is stationary.

31. A method according to claims 27 and 30 wherein the coefficient $\beta$ takes the value 0.5 or 0.1 according to the estimated degree ($I_{stat}$(n)) to which the spectrum of the audio signal is stationary.

32. A method according to any one of claims 15 to 31 wherein the synthesis filter used when the bit stream indicates the second coding mode has a transfer function of the form $1/A_B(z)$, where $A_B(z)$ is a polynomial in $z^{-1}$ whose coefficients ($P_B^k$(n)) are obtained from said linear prediction analysis applied to the decoded audio signal ($\Sigma_n$(t)).

33. A method according to any one of claims 15 to 31 wherein the synthesis filter used when the bit stream indicates the second coding mode has a transfer function of the form $1/[A_F(z).A_B(z)]$ where $A_F(z)$ and $A_B(z)$ are polynomials in $z^{-1}$, the coefficients ($P_B^k$(n)) of the polynomial $A_B(z)$ being obtained from parameters (Q(n)) included in valid frames of the bit stream and the coefficients ($P_B^k$(n)) of the polynomial $A_B(z)$ being obtained from said linear prediction analysis applied to a signal obtained by filtering the decoded audio signal ($\Sigma_n$(t)) using a filter with the transfer function $A_F(z)$.

# FIG.1

## FIG.2

BFI

F → 20

Q(n) → CALCUL FILTRE AVANT 21

{P_F^k(n)} → MEMORISATION 34 → ESTIMATION FILTRE AVANT 36

25 CALCUL FILTRE LPC ARRIERE

{P̃^k(n)}

I_stat(n), {P^k(n)} → ESTIMATION STATIONNARITE 38

ANALYSE LPC ARRIERE 30

MEMORISATION 31

d(n)

23

24

a_k(n)

EX(n) → 33 MEMORISATION → 27 → SYNTHESE RESIDU 26 → Ẽ_n(t) → 1/A(z) 22 → Σ̃_n(t)

35 ESTIMATION EXCITATION

DETECTION VOISE/NON VOISE 37

EP 1 051 703 B1

## FIG.3

$E(\widetilde{\Sigma}_n) <$ seuil ? — **40**  oui / non — **42**

d(n) = 0 ?  oui / non

**43** — $N_0 = N_0+1$   $N_1 = N_1+1$ — **44**

$N_0+N_1 = N$ ? — **45**  oui / non

**46** — $N_0 = N_0/2$   $N_1 = N_1/2$

$I_{stat}(n) = f(N_0,N_1)$ — **41**

n = n+1

## FIG.4

$P^k(n) = (1-\alpha).\widetilde{P}^k(n)+\alpha.P^k(n_0)$ — **50**

Trame n effacée ? — **51**  oui / non — **52**

d(n) = 0 ?  oui / non — **53**

$I_{stat}(n) = 0$ ?  oui / non

**54** — $\alpha = \alpha-\beta_0$   $\alpha = \alpha-\beta_1$ — **55**

$n_0 = n$   $\alpha = \alpha_{max}$ — **58**

$\alpha < 0$ ? — **56**  oui / non

$\alpha = 0$ — **57**

n = n+1